# FASCICULE DE BREVET EUROPEEN

(11) **EP 1 711 506 B1**
(45) Date de publication et mention de la délivrance du brevet: **08.10.2014**
(21) Numéro de dépôt: 04816401.6
(22) Date de dépôt: 16.12.2004
(51) Int. Cl.: C07F 7/10

(54) **SYNTHESE DE BIURETS ET D ISOCYANATES A FONCTIONS ALCOXYSILAN ES, FORMULATIONS EN CONTENANT ET LEURS APPLICATIONS**
SYNTHESE VON BIURETVERBINDUNGEN UND ISOCYANATEN MIT ALKOXYSILANFUNKTIONEN, FORMULIERUNGEN, DIE DIESE ENTHALTEN, UND DEREN ANWENDUNGEN
SYNTHESIS OF BIURETS AND ISOCYANATES WITH ALKOXYSILANE FUNCTIONS, FORMULATIONS CONTAINING SAME AND USE THEREOF

(30) Priorité: 24.12.2003 FR 0315410
(43) Date de publication de la demande: 18.10.2006
(73) Titulaire: Vencorex France, 69800 Saint-Priest (FR)
(72) Inventeur: BERNARD, Jean-Marie Alphonse Etienne, F-69440 SAINT-LAURENT D'AGNY (FR); SCHWARZ, Johannes, F-69009 LYON (FR); REVELANT, Denis, F-69740 GENAS (FR)
(74) Mandataire: Colombet, Alain André
(86) Numéro de dépôt international: PCT/FR2004/003261
(87) Numéro de publication internationale: WO 2005/070942

(56) Documents cités:
- EP-A- 0 649 850
- EP-A- 0 765 893
- EP-A- 1 318 160
- WO-A-02/077057
- US-A- 3 361 783
- US-A- 3 933 756
- US-A- 4 143 060
- US-A- 4 412 073
- US-A- 4 512 898
- US-A1- 2001 031 848

## Description

La présente invention à pour objet des compositions polyisocyanates présentant des fonctions silane, et notamment alcoxysilane, la préparation de ces compositions et l'utilisation de ces compositions. Elle a également pour objet la synthèse de monomère comportant à la fois une fonction silane et une fonction isocyanate.

Pour replacer la présente invention dans le contexte industriel et sémantique il convient de procéder à un certain nombre de rappel et de préciser ou remémorer un certain nombre de définition.

Dans leur majorité, les compositions polyisocyanates sont le plus souvent formées de dérivés issus d'oligocondensation de molécule(s) unitaire(s) di-, tri, voire tétra isocyanate.

Un tel type de molécule est qualifié de « monomères » et est susceptible d'être obtenues par phosgénation d'une diamine primaire, éventuellement porteuse d'une, voire de deux, autres fonctions amine primaire. Ainsi une telle molécule contient un motif constitué d'une chaîne carbonée porteuse d'au moins deux azotes (provenant de la diamine à phosgéner), motif que l'on désignera par « motif di-amino » dans la suite de la description. Le motif di-amino sert ici de vestiges ou de trace de l'existence passée ou présente d'un monomère isocyanate : ainsi le motif di-amino est de structure

>N-R-N<

où R représente un radical hydrocarboné qui est le reste d'un monomère isocyanate après ignorance de deux fonctions isocyanates. Bien entendu R ne présente aucune des fonctions créées lors de l'oligomérisation d'une fonction isocyanate, à savoir les fonctions carbamate, urée (y compris biuret), allophanate, biuret et celles qui sont mentionnées à l'occasion de la description des oligocondensation (y compris oligomérisation). La masse moléculaire de -R-est au plus égale à 200. R peut comporter un autre groupe « amino » dans le cas des monomères trifonctionnel comme le LTI, le NTI et l'UTI.

Les signes « amino » N< et >N signifient que l'azote peut être engagé dans toute fonction telle que fonction isocyanate, amine, amide, imide, urée et notamment les fonctions engendrées par les réactions d'oligomérisation.

Ces motifs di-amino se retrouve dans la quasi-totalité des oligocondensation et dans l'immense majorité des transformations des fonctions isocyanates. Cette constatation permet de faire référence au nombre de motifs di-amino pour indiquer notamment l'état de condensation des et des oligocondensats (y compris oligomères) voire des polycondensats, et même en cas d'hétérocondensats (auxquels cas on pourra avoir plusieurs types de motifs di-amino).

Selon l'usage courant en chimie, lorsqu'une fonction a donné son nom à une famille de composés, comme c'est le cas pour les isocyanates, on définit le caractère aromatique ou aliphatique selon le point d'attache de la fonction considérée. Lorsqu'un isocyanate est situé sur un carbone de nature aliphatique, alors on considère que le composé isocyanate est lui-même de nature aliphatique. De même, lorsqu'une fonction isocyanate est rattachée au squelette par l'intermédiaire d'un carbone de nature aromatique, alors on désignera l'ensemble du monomère par l'expression isocyanate aromatique.

Pour expliciter ce point on peut rappeler que :
- On considère comme aromatique toute fonction isocyanate dont le point d'attache est un maillon d'un cycle aromatique;
- on considère comme aliphatique toute fonction isocyanate dont le point d'attache (de l'azote bien sûr) est un carbone d'hybridation sp³.

Parmi les isocyanates aliphatiques on peut faire les distinctions suivantes :
- On considère comme cycloaliphatiques, toute fonction isocyanate aliphatique dont le point d'attache est distant d'un cycle le plus proche d'au plus un carbone (il est même de préférence, est reliée directement à lui).
- On considère comme secondaire toute fonction isocyanate dont le point d'attache est porté par un carbone sp³ secondaire (c'est-à-dire un carbone relié à deux carbones et à un hydrogène).
- On considère comme tertiaire, toute fonction isocyanate dont le point d'attache est porté par un carbone sp³ tertiaire, (c'est-à-dire un carbone relié à trois carbones).
- On considère comme néopentylique toute fonction isocyanate dont le point d'attache est porté par un carbone sp³, lui-même porté par un carbone tertiaire (c'est-à-dire compte non tenu de la dernière liaison, un carbone relié à trois carbones).
- On considère comme linéaire toute fonction isocyanate dont le point d'attache est porté par un méthylène sensu stricto (-CH₂-), lui-même porté par un carbone sp³ exocyclique et non tertiaire.

En ce qui concerne les monomères et pour la présente description on entend par :
- Aliphatique tout monomère dont toutes les fonctions isocyanates sont aliphatiques ;
- Aromatique tout monomère dont toutes les fonctions isocyanates sont aromatiques ;
- Mixte tout monomère dont une fonction au moins est aliphatique et dont une fonction au moins est aromatique ;
- cycloaliphatique tout monomère dont toutes les fonctions isocyanates sont aliphatiques et dont une au moins est cycloaliphatique ;
- aliphatique linéaire tout monomère dont toutes les fonctions isocyanates sont aliphatiques, dont aucune n'est cycloaliphatique et dont une au moins est linéaire, ou qui présentent au moins un enchaînement polyméthylène, libre en rotation, et donc exocyclique, (CH₂)_{π} où π représente un entier au moins égal à deux 2.

Si l'on détaille un peu plus, les isocyanates monomères peuvent être :
◆ aliphatiques, y compris cycloaliphatiques et arylaliphatiques (ou araliphatique), tels que :
   - comme aliphatique linéaire (ou simples), les polyméthylènediisocyanates monomères qui présentent un ou des enchaînements polyméthylène exocycliques (CH₂)_{π} où π représente un entier de 2 à 10, avantageusement de 4 à 8 et notamment l'hexaméthylène diisocyanate l'un des méthylène pouvant être substitué par un radical méthyle ou éthyle comme c'est le cas du MPDI (méthyl pentaméthylène diisocyanate);
   - comme aliphatique cyclique (ou cycloaliphatique) : partiellement "néopentylique" et cycloaliphatique ; l'isophorone diisocyanate (IPDI) ;
   - comme aliphatique cyclique (cycloaliphatique) diisocyanate ceux dérivés du norbornane ou les formes hydrogénées (hydrogénation du noyau conduisant à un cycle diaminé ensuite soumis à une isocyanatation par exemple par phosgénation) des isocyanates aromatiques ;
   - comme araliphatique les arylènedialcoylènediisocyanates (tel que OCN-CH₂-Φ-CH₂-NCO ; dont une partie est réputée aliphatique linéaire, à savoir ceux dont la fonction isocyanate est distante des noyaux aromatiques d'au moins deux carbones tels que (OCN-[CH₂]ₜ-Φ-[CH₂]ᵤ-NCO) avec t et u supérieur à 1 ;
◆ ou encore aromatiques tels que le toluylène diisocyanate mentionné ici pour mémoire mais dont, en revanche, la forme hydrogénée est réputée cycloaliphatique et est intéressante tel les 1,3 et 1,4 BIC (Bislsocyanatométhyle Cyclohexane).

D'une manière générale la masse moléculaire d'un monomère ne dépasse pas 300 et est au moins égal à 100.

Selon la présente invention, il est souhaitable que les monomères aliphatiques linéaires soient utilisés au moins en partie pour la mise en oeuvre de la présente invention aussi peut-on ajouter à ceux qui sont mentionné ci dessus, les dérivés de la lysine et notamment le LDI (Lysine Di-Isocyanate, issu d'ester de la lysine), LTI (lysine tri-isocyanate, issu de l'ester de la lysine avec l'éthanolamine), le NTI (NonylTri-Isocyanate OCN-(CH₂)₄-CH(CH₂-NCO)-(CH₂)₃-NCO), l'UTI (Undécyle Tri-Isocyanate OCN-(CH₂)₅-CH(-NCO)-(CH₂)₅-NCO).

La plupart de ces monomères ont une tension de vapeur trop élevée pour répondre aux contraintes réglementaires relatives à la sécurité du travail. Aussi alourdit-t-on ces molécules en les polycondensant.

Ces condensations mettent en jeu les fonctions isocyanates. les « monomères » étant polyfonctionnel en isocyanate, ces condensations pourront avoir lieu sur deux ou plusieurs fonction isocyanate d'une même molécule. Il s'ensuit que ces réactions pourront conduire à des oligomère plus ou moins lourds selon le taux de transformation des isocyanates

On rappellera ci-après les principaux polycondensats :
les dérivés obtenus par "trimérisation", c'est-à-dire que l'on condense trois fonctions isocyanate appartenant à trois molécules différentes pour former un cycle isocyanurique porteur de trois groupes eux-mêmes porteurs d'une fonction isocyanate.

On peut rappeler les principaux motifs, fonctions ou cycles susceptibles de se former à l'occasion de la trimérisation :

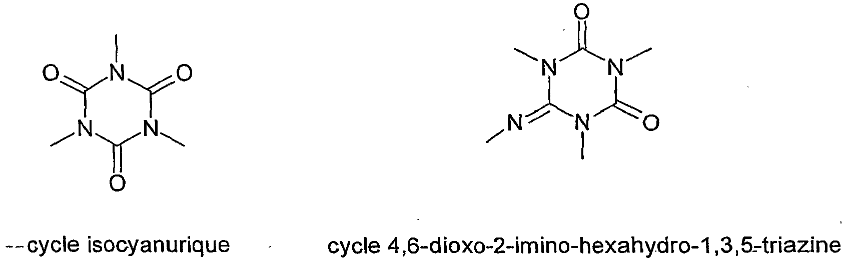

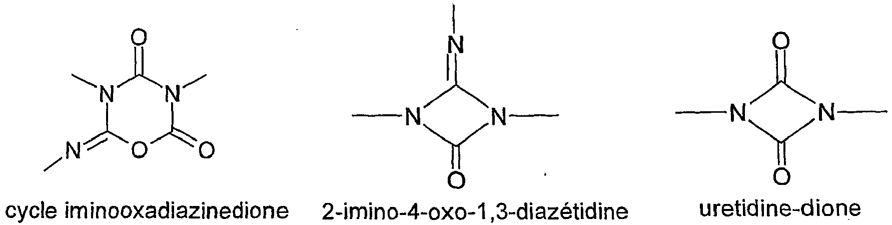

Une autre manière d'alourdir la molécule est de les faire se condenser les unes sur les autres en présence d'eau pour former un dérivé porteur de trois fonctions isocyanates que l'on désigne sous l'expression de biuret. La réaction ci-après montre la réaction dans le cas le plus fréquent c'est-à-dire le cas où les trois molécules à condenser sont les mêmes : 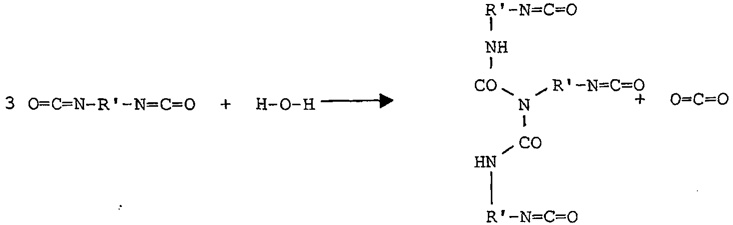 on peut également condenser ces monomères sur des alcools, notamment des polyols, ce qui donne des composés polyfonctionnels, carbamates puis allophanates.

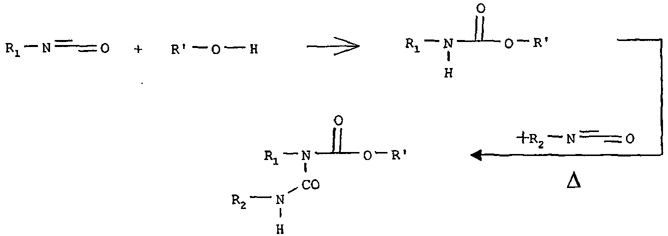

Dans les compositions polyisocyanates, le plus souvent l'on trouve, à coté des polycondensats majoritaires, des quantités mineures de divers type de condensation.

Dans leur grande majorité, les isocyanates étaient, jusqu'il y a peu, essentiellement dissous dans des solvants organiques. L'utilisation de solvants organiques est de plus en plus souvent critiquée par les autorités en charge de la sécurité du travail, car ces solvants, ou du moins certains d'être eux, sont réputés toxiques ou chronotoxiques. C'est la raison pour laquelle on essaye de développer de plus en plus des techniques qui ne contiennent que peu de solvant, voire qui soient sans solvant.

En particulier, pour diminuer l'utilisation de solvant organique, dont la présence est réputée toxique pour ceux qui le manipulent et néfaste pour l'environnement, l'on a proposé de mettre au point des compositions isocyanates moins visqueuses. Cet abaissement de viscosité permet de réduire la quantité de solvant et rend les compositions plus aptes à être émulsionnées.

Par ailleurs le marché est demandeur de composé permettant de réaliser une double réticulation et donc une double ou multiple fonctionnalité.

En outre on est toujours à la recherche de compositions permettant une forte adhésion avec ou sans primaire, ou même capables de jouer le rôle de primaire.

On est ainsi en recherche de promoteur d'adhérence.

Parmi les compositions polyisocyanate oligomériques les plus utilisées, on peut citer notamment le mélange d'oligomère présentant un motif biuret et désigné familièrement par « biuret ».

Ce biuret est actuellement réalisé par action de l'eau sur des monomères isocyanate en présence de quantité très faible, d'acide.

Le taux de transformation du monomère est de l'ordre de 45%.

Dans le cas ou le monomère est de l'hexaméthylène diisocyanate la viscosité du produit résultant de la synthèse après distillation du monomère est de l'ordre de 9000 mPa.s.

Cette synthèse présente deux inconvénients notables: la formation d'uréides insolubles qu'il convient d'éliminer et d'autre part la viscosité relativement élevée du produit après distillation du monomère.

D'une manière générale les urées présentent souvent des problèmes d'insolubilité surtout vis à vis des composés à caractère nettement lipophile.

Par ailleurs le marché demandé des compositions présentant une haute fonctionnalité.
Par ailleurs, quelques monomères isocyanates à fonction alcoxysilane sont connus. A titre d'exemples on peut citer les isocyanato propyl triméthoxy et triéthoxy silane. Ces monomères volatils sont classés comme toxiques.
WO 02/077057 décrit une composition polyisocyanate avec une fonctionnalité moyenne supérieure à 3 mais cette composition ne comprend pas de composés avec des motifs aminoalcoylsilanes.
US 4 412 073 décrit un catalyseur de type aminosilane pour la cyclotrimérisation notamment de composés comprenant des groupes isocyanurates mais pas de groupes aminoalkylsilanes.
EP 0 765 893 décrit un mélange de polyisocyanates comprenant des groupes isocyanurates, des groupes allophanates et des groupes siloxanes mais pas de groupes aminoalkylsiloxanes.
EP 1 318 160 concerne la préparation de composés polyisocyanates comprenant des groupes isocyanurates en présence d'un composé silylé comme catalyseur.
US 3 361 783 décrit la préparation de composés silylurées.
US 3 933 756 concerne la préparation d'une résine synthétique par réaction d'un polyisocyanate avec un composé aminoalkylsilane.
US 4 143 060 concerne la préparation de dérivés urées substitués par un groupe silyle.
US 4 512 898 décrit des dérivés organosilanes spécifiques.

Les polyisocyanates à fonctions alcoxysilanes sont considérés comme difficile d'accès surtout lorsqu'une teneur importante en groupement alcoxysilane est désirée. Ils sont généralement obtenus par greffage de molécules alcoxysilanes à fonction hydrogène mobile sur les fonctions isocyanates d'un polyisocyanates. En général les molécules alcoxysilanes utilisées sont des amines qui par réaction avec les fonctions isocyanates d'un polyisocyanate donnent des polyurées alcoxysilanes qui sont généralement solides et peu soluble dans les solvants organiques. Ces composés ne donnent pas des mélanges homogènes.

Cette faible solubilité dans les solvants organiques a conduit les utilisateurs à ne greffer qu'une partie des fonctions isocyanates et obtenir des composés hybrides isocyanates urées alcoxysilanes.

Toutefois, cette solution de greffage partiel n'est pas toujours intéressante car le contrôle du greffage n'est pas facile, dépend des structures des polyisocyanates utilisés et surtout des phénomènes de cristallisation non spontanés se produisent conduisant à une cristallisation des polyisocyanates urées alcoxysilanes au cours du stockage de formulations contenant ces dérivés.

Par ailleurs, ces structures urées alcoxysilanes entraînent des augmentations de viscosité des formulations et demandent donc des volumes de solvant plus importants pour pouvoir être appliquées correctement. Cette augmentation de solvants n'est pas ou peu compatible avec la démarche de diminution des rejets organiques volatils dans l'atmosphère.

C'est pourquoi un des buts de la présente invention est de procurer un procédé qui réduise ou supprime la formation d'uréides insolubles.

Un autre but de la présente invention est de procurer une technique qui permette que rendre compatible isocyanate et silane et notamment alcoxysilanes.

Un autre but de la présente invention est de procurer des compositions isocyanate à groupement biuret.

Un autre but de la présente invention est de procurer un procédé qui permette de réduire la viscosité de la composition finale pour le même taux de transformation du ou des monomères(s), la mesure de la viscosité étant réalisée dans les conditions dites normales, après élimination du, ou des, monomère(s) résiduel(s) (les compositions visées présentent en masse au plus 1%, avantageusement au plus 0,5%, de préférence au plus 0,2%, plus préférentiellement au plus 0,1%). Pour la mesure de la viscosité voir norme NFT30-029 (octobre 1980).

Un autre but de la présente invention est de procurer des compositions à groupement biuret qui présente une viscosité réduite.

Un autre but de la présente invention est de fournir des compositions polyisocyanates à fonctionnalité élevée, qui peuvent être utilisées seule ou en mélange avec d'autre.

Un autre but de la présente invention est de fournir des compositions polyisocyanate possédant une double ou multiple fonctionnalité permettant de réaliser une double réticulation.

Un autre but de la présente invention est de fournir des compositions polyisocyanate une forte adhésion avec ou sans primaire, ou même capables de jouer le rôle de primaire.

Ces buts et d'autres qui apparaîtront par la suite sont atteints au moyen d'une composition comprenant au moins deux composés oligomériques distincts comportant au moins trois motifs et au plus 5 (limiter peut-être à 4) motifs choisis parmi les motifs aminoalcoylsilanes et les diamino et au moins une fonction choisie parmi les fonctions isocyanate et parmi celles qui en dérivent caractérisé par le fait que l'un des dits composés comporte au moins deux motifs aminoalcoylsilanes et qu'un autre comporte au moins deux motifs diamino.

L'invention concerne une composition polyisocyanate selon la revendication 1.

avantageusement ces compositions ne comporte pas de monomère ; voir supra sur la mesure de la viscosité.

Dans ladite composition, Il est souhaitable qu'il y ait aussi peu de fonction urée vraie que possible ; avantageusement le rapport entre les fonctions urée vraie (numérateur) et les fonctions acylurée et biuret (dénominateur) soit au plus égal à ½, avantageusement à 1/3, de préférence à 1/5, plus préférentiellement à 1/10. De tels rapports sont aisément accessibles par des mesures spectroscopiques.

Lorsqu'il n'y a pas de biuret ou d'acylurée, la teneur en fonction urée vrai est avantageusement au plus égale à 1% des fonctions isocyanates (NCO), de préférence à 0,5%.

On considère comme fonction urée vraie le motif :
-NH-CO-N< dans lesquels les liaisons laissées ouvertes des azotes ne sont connectées qu'à l'hydrogène et/ou à un radical aliphatique.

il est souhaitable que sur l'ensemble de la composition le rapport en équivalent entre les motifs aminoalcoysilanes et les motifs diamine est au moins égal à 15%.

Généralement, lesdits composés oligomériques représentent chacun au moins 3%, avantageusement au moins 5%, de préférence au moins 8% en masse de la composition.

Par ailleurs il est souhaitable que lesdits composés oligomériques représentent pour chaque catégorie au plus, 2/3, avantageusement, de préférence 1/3 en masse de la composition.

Selon une mise en oeuvre préférée de la présente invention composition selon les revendications 1 à 4, caractérisée par le fait que sur la totalité des composés oligomériques (c'est-à-dire composés oligomériques comportant au moins trois motifs et au plus 5 motifs choisis parmi les motifs aminoalcoylsilanes et les motifs diamino et au moins une fonction choisie parmi les fonctions isocyanate et parmi celles qui en dérivent) les composés dans lesquels les motifs aminoalcoylsilanes représentant au moins deux cinquièmes des motifs considérés (motifs aminoalcoylsilanes et les motifs diamino) forme au moins 1/5 du mélange.
les dites fonctions qui dérivent des fonctions isocyanates sont avantageusement choisies parmi les fonctions carbamate, urétidinedione, isocyanurate, biuret, allophanate, pseudoallophanate, 4,6-dioxo-2-imino-hexahydro-1,3,5-triazine ; iminooxadiazinedione et 2-imino-4-oxo-1,3-diazétidine. composition selon les revendications 1 à 6, caractérisée par le fait que ledit motif aminoalcoylsilanes répond à la formule I : 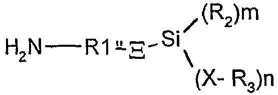 où Ξ représente soit une liaison simple soit un chalcogène de préférence un oxygène.

Avantageusement lesdits composés sont des composés à fonction biuret.

Avantageusement la composition présente une teneur en fonction biuret (>N-CO-N(-)-CO-N< MM = 84) est au moins égale à 5%, avantageusement à 8%, de préférence à 10%. Cette teneur en fonction biuret (>N-CO-N(-)-CO-N< MM = 84) est au plus égale à 20%, avantageusement à 18%, de préférence à 16%.

La composition présente une teneur en fonction isocyanate totale (libre et masquée) au moins égale à 5%, avantageusement à 8%, de préférence à 10%, plus préférentiellement à 12%.

Selon une mise en oeuvre de la présente invention, la composition présente une teneur en fonction isocyanate libre au moins égale à 5%, avantageusement à 8%, de préférence à 10%, plus préférentiellement à 12%.

Selon une mise en oeuvre de la présente invention la composition présente une teneur en fonction isocyanate masquée au moins égale à 5%, avantageusement à 8%, de préférence à 10%, plus préférentiellement à 12%.

Selon la présente invention, la composition (avec des fonctions isocyanates non masquées) peut présenter une viscosité au plus égale à 6000 mPa.s, avantageusement à 4000mPa.s, de préférence à 3000mPa.s. ce qui est remarquable pour des compositions polyisocyanates à base de biuret.

La composition comporte au plus 2%, avantageusement au plus 1%, de préférence au plus à 0,5% en masse d'isocyanate monomère(s) (en général diisocyanatoalcane).

Par ailleurs, selon un mode de réalisation intéressant de l'invention, la composition peut comporter au plus 2%, avantageusement au plus 1%, de préférence au plus à 0,5% en masse d'isocyanatoalcoylsilane (correspondant à l'aminoalcoylsilane).

Un autre but de la présente invention est de procurer un procédé de préparation d'une composition isocyanate comportant des fonctions biuret caractérisé par le fait que l'on met en contact au moins un monomère isocyanate avec un aminoalcoylsilane (ou silanoalcoylamine) de manière que l'on forme un isocyanatoalcoylsilane.

Le procédé repose sur le résultat de l'étude des équilibres exposé ci après. Ce procédé perme de faire du biuret sans adjonction d'eau et en faisant comme sous produit potentiel un dérivé isocyanatosilylé (isocyanatoalcoxysilane) difficile à fabriquer (voir supra) notamment de formule Ib 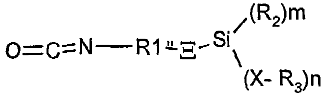 la réaction sur l'amine commence comme suit : 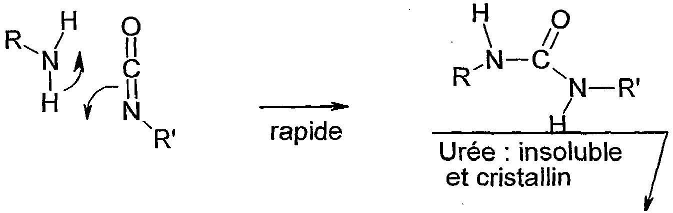 puis 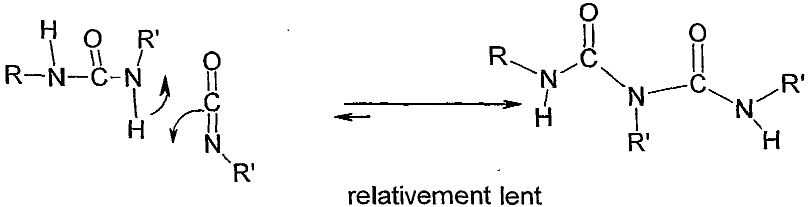 où R représente un radical porte d'amine et notamment 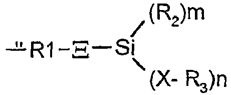 où R' représente le reste d'un isocyanate après ignorance d'une fonction isocyanate.

Toutefois la formation réversible du biuret peut conduire à la formation de l'isocyanate sur le radical de l'amine si le mélange réactionnel est chauffé suffisamment pendant une durée assez longue :

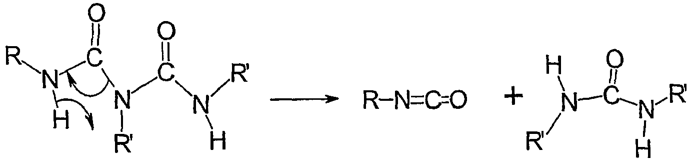

Cette réaction qui favorisée par la relative volatilité du radical silyle permet d'obtenir toutes les variantes du biuret si la réaction est menée à reflux ou l'isocyanate à la place de la fonction amine de départ si l'on distille le R-NCOformé.

Cet équilibrage de la composition par l'intermédiaire de l'échange avec les monomères libres conduit à ce que l'on forme (rapportée à la totalité des fonctions biuret) au moins cinq pour cent, avantageusement 7%, de préférence 10% de fonction biurets non porteuses de chaîne silanoalcoyle. Et cela stabilise la composition en la rendant plus homogène

Pour que cet équilibrage se passe dans de bonnes conditions, il est souhaitable que, exprimé en équivalent, le rapport entre les fonctions isocyanate et le nombre d'hydrogène porté par les fonctions amines est d'au moins 4, avantageusement au moins 6, de préférence au moins huit.
Il est également souhaitable de se placer à haute température au moins 140°C , avantageusement 150°C, de préférence à 160°C et:ou d'utiliser des catalyseursde biuretisation tel que les acides forts et/ou moyen.

Plus précisément la présente invention consiste en la préparation de compositions polyisocyanates à motifs acyles ou carbamoyle urées et comportant au moins un motif (R₃-X)3-m -Si (-(R₂)m)- obtenue selon un procédé qui met en oeuvre un composé comportant au moins une fonction isocyanate, de préférence au moins deux fonctions isocyanates avec un composé comportant au moins une fonction amine primaire ou secondaire et/ ou éventuellement un composé comportant au moins une fonction acide carboxylique. Le procédé se caractérise par une réaction en une étape avec un excès de composés isocyanates par rapport à l'amine introduite à une température comprise entre 100 et 200°C de préférence entre 110°C et 180°C. Le temps de réaction est compris entre 1 et 10 heures et le monomère en excès est ensuite éliminé par distillation sous film mince de manière à ce que le produit final contienne une teneur en HDI monomère inférieure à 2% de préférence inférieure à 1%.

Le taux de transformation en isocyanate est généralement fixé par la quantité d'amines introduite.
La teneur en oligomères des compositions varient avec le ratio fonctions isocyanates sur fonctions amines.

En général les structures objets de l'invention donnent des viscosités relativement basses du fait de la formation de liaisons hydrogène intra moléculaire au niveau des motifs biurets et / ou acylurées.

En général, les compositions biuret contiennent les structures qui peuvent être schématisées par la formule générale suivante :

A-(NCO)z-(Si - (R2)m -(X-R3)n)y

Avec
A représentant le reste d'un squelette à structures biuret et/ou acyles urées ;
z représentant un nombre compris entre 0 et 30 ;
y représentant un nombre compris 1 et 30 ;
m représentant un nombre entier compris dans l'intervalle fermé (c'est-à-dire contenant les bornes) 0 et 3, avantageusement au moins égal à 2, de préférence à 3 ;
n représentant un nombre entier compris dans l'intervalle fermé (c'est-à-dire contenant les bornes) 0 et 3 avantageusement au plus égal à 2 ;
avec la condition que m + n = 3
- R₂ une chaîne hydrocarbonée de 1 à 20 atomes de carbone de préférence de 1 à 12 atomes de carbone cette chaîne hydrocarbonée pouvant être aliphatique, y compris aralcoyle, ou aromatique; linéaire ou ramifiée éventuellement interrompu par des hétéroatomes, la chaîne R₂ pouvant être de type alcoylène si les deux carbones terminaux de cette chaîne sont liés au silicium
- R₃ une chaîne hydrocarbonée de 1 à 20 atomes de carbone de préférence de 1 à 12 atomes de carbone cette chaîne hydrocarbonée pouvant être aliphatique ou aromatique ou aralcoyle, linéaire ou ramifiée éventuellement interrompue par des hétéroatomes, la chaîne R₃ pouvant être de type alcoylène si les deux carbones terminaux de cette chaîne sont liés à deux groupes X portés par le même atome de silicium
- X = O ou S.

A titre d'exemples non limitatifs de la structure générale on peut citer les structures suivantes :
- Les structures à motifs biuret ci après notés de 1 à 5
- Les structures acylurées notées de 6 à

Structures 1 : Biuret dit vrai comportant deux motifs isocyanates et un motif alcoxysilane, la fonction amine engagée dans le biuret portant un groupe Y qui peut être l'hydrogène ou une chaîne hydrocarbonée de 1 à 20 atomes de carbone aliphatique, y compris araliphatique, ou aromatique ou linéaire ou ramifié éventuellement interrompue par des hétéroatomes.

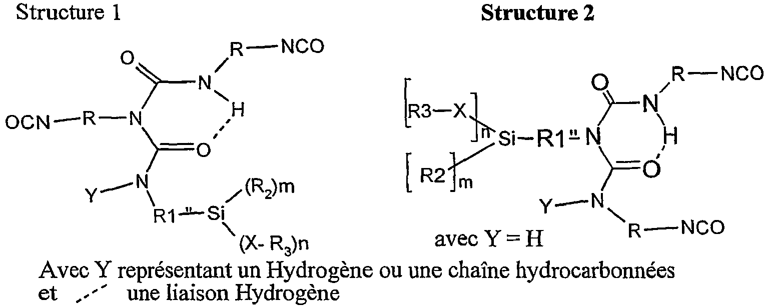

Structures 2 : Biuret dit vrai comportant deux motifs isocyanates et un motif alcoxysilane, la fonction amine engagée dans le biuret portant un groupe Y qui ne peut être que l'hydrogène

Structures polybiuret à fonctionnalité 2 en NCO: produits d'oligomérisation des structures 1 et / ou 2 pour conduire à des enchaînements oligomèriques comprenant de 2 à 20 unités. Ces enchaînements peuvent être schématisés comme suit, la répartition des structures étant aléatoire le long de la chaîne

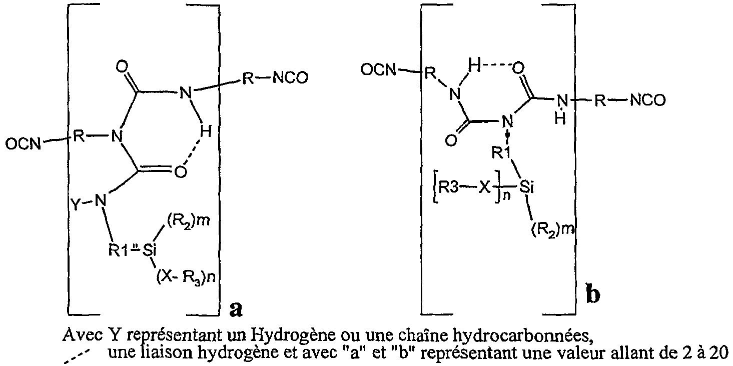

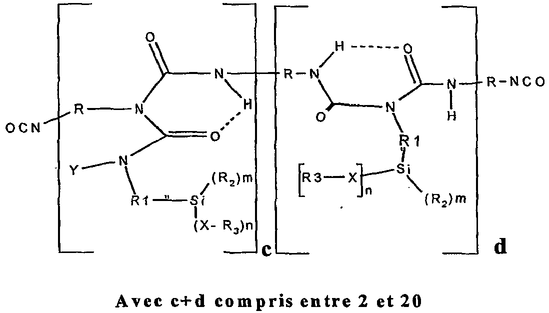

Les compositions contiennent aussi des structures biurets contenant une chaîne isocyanate et deux chaînes alcoxysilanes (structures 3) et à des quantités beaucoup plus faibles des structures biurets constituées de 3 motifs alcoxysilanes (structures 4). Ces dernières structures ne sont présentes que dans certaines conditions.

Les structures 3 peuvent être aussi incorporées dans des enchaînements polybiurets présentés ci dessus et dans ce cas constituent des limiteurs de chaîne (blocage des bouts terminaux de chaînes) du fait de leur monovalence isocyanate.

La présence de ces structures 3 et 4 s'expliquent par les conditions du procédé mis en jeu et reposent sur une réaction de transisocyanatation qui peut être accélérée par la température et par le catalyseur retenu.

Structure 3 : Biuret à deux fonctions alcoxysilanes et une chaîne isocyanate.

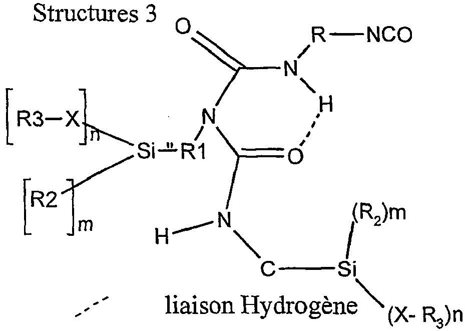

Structure 4 : Biuret à trois fonctions alcoxysilanes

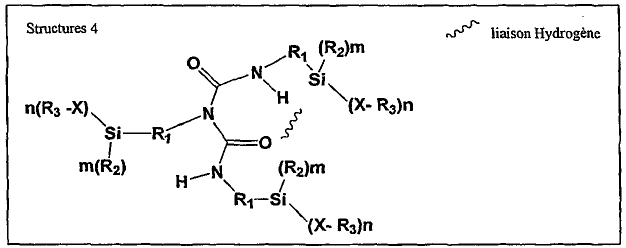

La composition contient aussi des enchaînements de fonctionnalité supérieure à 2 même si un diisocyanate est engagé seul dans la réaction avec une mono amino alcoyle silane. Ces enchaînements sont la conséquence du procédé mis en jeu.

La structure 5 représente un exemple d'enchaînements polybiurets de fonctionnalité supérieure à 2.

Structure 5 : exemple d'enchaînement polybiuret à fonctionnalité supérieure à 2 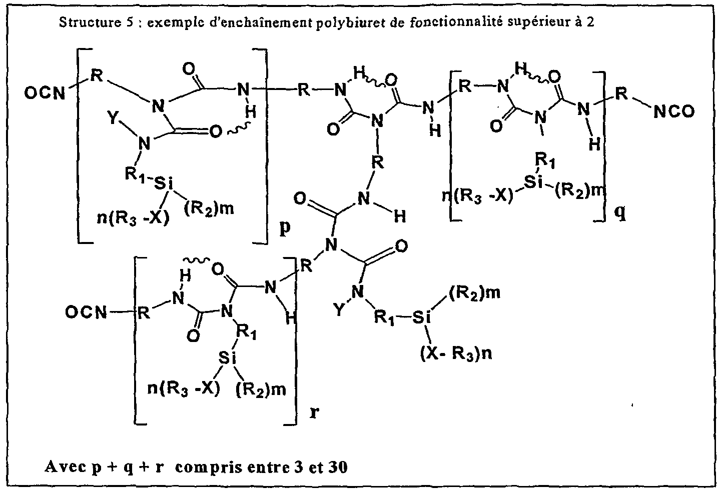 Avec
- R le reste d'une molécule isocyanate ou polyisocyanate porteur d'au moins une fonction isocyanate
- R₁ le reste d'une molécule porteur d'au moins une fonction silane en général une chaîne hydrocarbonée de 2 à 20 atomes de carbone de préférence de 3 à 12 atomes de carbone cette chaîne hydrocarbonée pouvant être aliphatique ou aromatique ou aralcoyle, linéaire ou ramifiée éventuellement interrompu par des hétéroatomes.
- R₂ et R₃, identiques ou différents, définis comme précédemment.
- n compris entre 1 et 3 et n + m = 3
- X = O ou S

### Structures à motifs acylurées :

Les structures à motifs acylurées peuvent s'écrire comme pour les structures biurets à la différence que le motif R₄ - C(=O) - remplace le motif R-NH - C (=O)- dans les structures biuret

A titre d'exemples on présente les structures acylurées 7 à 10 suivantes. Les enchaînements poly- acylurées ne sont pas représentés mais sont analogues aux enchaînements polybiurets.

Structures acylurées 7 à 9 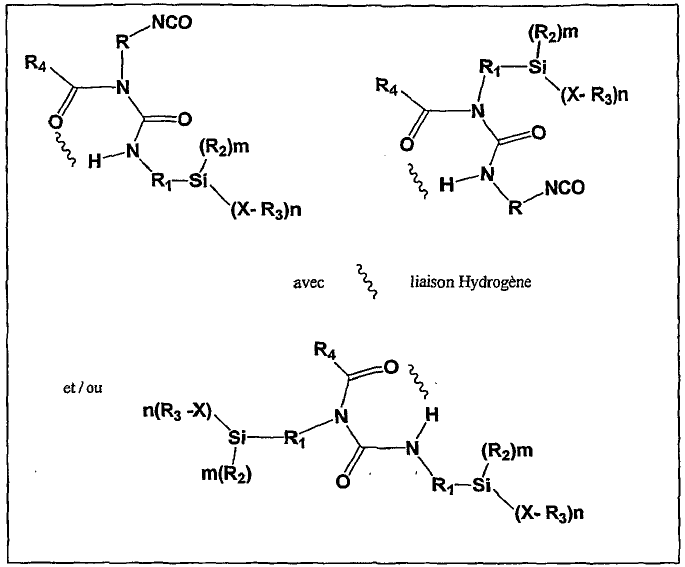 Avec
- R4 représentant le reste d'une molécule portant au moins une fonction carboxylique qui a réagi pour donner la fonction N acylurée

Dans le cas d'un diacide (R4-(COOH)2) la structure acylurée devient alors

Structure 10 : exemple de structure bis acylurée à motifs alcoxysilanes

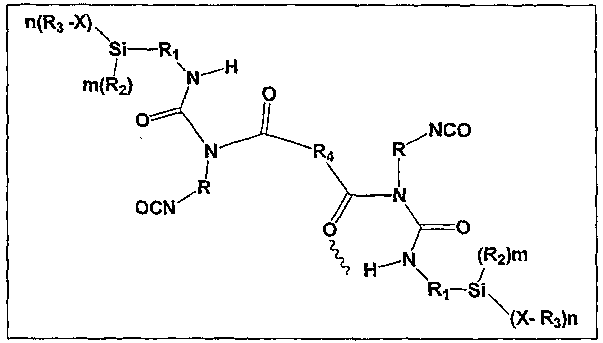

Au côté de ces structures 1 à 10 les compositions contiennent aussi des molécules oligomères ou polymères contenant des enchaînements contenant les motifs décrits ci dessus.

Les compositions peuvent aussi contenir des structures contenant des motifs
Allophanate - R- N [- C(=O)-NH-R-NCO]-C(=O)-O-R₅
Carbamate : - R- NH-C(=O)-O-R₅
Urée : - R- NH-C(=O)-NH-R₆- ou - R- NH-C(=O)-N - (R₆)(R₇)

| | |
|---|---|
| Uretidine dione | 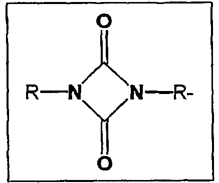 |
| Isocyanurate | 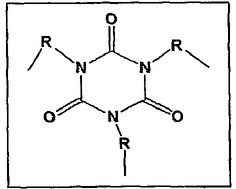 |
| Oxadiazine trione | 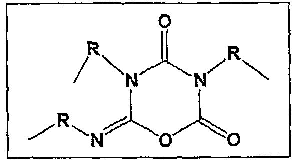 |
| Imminotrimère | 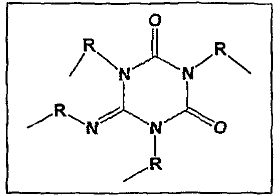 |

La synthèse de ces produits consiste en la réaction d'un composé comportant au moins une fonction isocyanate de préférence au moins deux fonctions isocyanates avec un composé comportant au moins une fonction amine primaire et / ou secondaire et au moins une fonction alcoxy dialcoyle silane et /ou une fonction alcoyl dialcoxy silane et / ou une fonction trialcoxysilane en présence éventuellement d'un composé comportant au moins une fonction acide carboxylique et d'un catalyseur. La réaction peut être réalisée en présence ou sans solvant.
Les composés isocyanates utilisés contiennent au moins deux et au plus 10 fonctions isocyanates et de préférence au plus 4. Ils peuvent être aliphatiques ou cycloaliphatiques.

Les mélanges de composés polyisocyanates peuvent aussi être utilisés. Dans le cas des mélanges de polyisocyanates, des composés ne comportant qu'une seule fonction isocyanate par mole de composé peuvent être incorporés mais leur teneur en fonctions isocyanates ne dépasse pas alors 50% de préférence 25% en mole des fonctions isocyanates du mélange. Des composés polyisocyanates comportant plus de 3 fonctions isocyanates et moins de 25 peuvent aussi être incorporés dans le mélange mais leur teneur en fonctions isocyanates ne dépasse pas 50% en mole des fonctions isocyanates du mélange et de préférence ne dépasse pas 25%.

A titre d'exemples non limitatifs de composés isocyanates aliphatiques on peut citer les diisocyanates tels que l'hexaméthylène diisocyanate(HDI), le 2 méthyl pentane diisocyanate (MPDI), le dodécane diisocyanate (DDI), l'ester méthylique ou éthylique ou d'alcoyles plus lourds du diisocyanate de la lysine (LDI), les triisocyanates tels que l'isocyanatoéthyl ester du diisocyanate de la lysine (LTI), le 4 isocyanatométhyl 1,8 octaméthylène diisocyanate (TTI)

A titre d'exemples non limitatifs de composés isocyanates cycloaliphatiques on peut citer les diisocyanates tels que les norbornane diisocyanate (NBDI), les bis isocyanato méthyl cyclohexane (BIC), l'Isophorone diisocyanate (IPDI).

A titre d'exemples non limitatifs de composés monoisocyanates on peut citer le butyl isocyanate, l'isocyanatopropyl trialcoxysilane, l'octadecyl isocyanate

A titre d'exemples non limitatifs de composés polyisocyanates on peut citer les oligomères isocyanurates de l'HDI, de l'IPDI.

Les composés porteurs d'au moins une fonction amines primaires et/ou secondaires utilisées pour la réaction sont de structures suivantes :

Y-NH-R₅-Si - (R₃-X)3-m(-(R₂)m

ou

Y-NH-R₆-N(-Y)-R₅-Si - (R₃-X)(3-m)-(R₂)m

ou

R₆-[(NH-R₅-Si - (R₃-X)3-m(-(R₂)m )]]z

Avec
- Y = H ou une chaîne hydrocarboné de 1 à 20 atomes de carbone aliphatique ou aromatique ou araliphatique linéaire ou ramifiée interrompue éventuellement par des hétéro atomes
- R₅ une chaîne hydrocarbonée de 1 à 20 atomes de carbone aliphatique ou aromatique ou araliphatique linéaire ou ramifiée interrompue éventuellement par des hétéro atomes, R₅ est de préférence une chaîne hydrocarbonée aliphatique de 1 à 8 atomes de carbones
- R₆ une chaîne alcoylène hydrocarboné de 1 à 20 atomes de carbone, aliphatique ou aromatique ou araliphatique linéaire ou ramifiée interrompue éventuellement par des hétéroatomes
- z = 2 à 6, de préférence z = 2

Dans le cas particulier de la préparation des acylurées on peut utiliser tout ou partie des composés porteurs d'au moins une fonction amine primaire et/ou secondaire et d'au moins une fonction silane sous forme de sel du composé porteur d'au moins une fonction acide carboxylique.

Les composés porteurs d'au moins une fonction acide carboxylique sont des composés aliphatiques ou aromatiques ou hétérocycliques. Ils comportent au moins une fonction acide carboxylique, au plus 6, de préférence au plus 2. Le nombre de carbone est compris entre 2 et 20 de préférence entre 2 et 12.

On peut citer
à titre d'exemples non limitatifs de composés comportant au moins une fonction carboxylique
l'acide acétique, l'acide propionique , l'acide isobutyrique, l'acide pivalique, l'acide benzoïque l'acide 2éthylhexanoique l'acide undécanoïque l'acide stéarique et leurs homologues ramifiés
à titre d'exemples non limitatifs de composé comportant au moins deux fonctions carboxyliques l'acide adipique, l'acide dodécanedioique, l'acide undécanedioique l'acide glutarique et leurs homologues ramifiés

Le procédé de synthèse des polybiurets consiste
- à introduire dans un réacteur un isocyanate de préférence diisocyanate ou un mélange d'isocyanates
- à ajouter éventuellement un catalyseur de biurétisation tel qu'un acide carboxylique ou un acide de Lewis tel que le dibutyl dilaurate d'étain
- à chauffer ce mélange à 110°C
- à ajouter à ce mélange un composé porteur d'au moins une fonction amine primaire ou secondaire et porteur d'une fonction silane ou un mélange de ces amines
- à maintenir le milieu réactionnel à une température comprise entre 100 et 200°C de préférence entre 110°C et 160°C pendant un temps compris entre 1 et 5 heures
- à éliminer le monomère n'ayant pas réagi par un procédé adapté tel que la distillation sous vide sur un appareil à film mince
- à récupérer le produit poly biuret à motifs alcoxysilane et à motifs isocyanate.

Une variante du procédé consiste à ajouter l'amine à l'isocyanate à froid et chauffer en suite à une température comprise entre 100 et 200°C, de préférence entre 110°C et 160°C pendant un temps compris entre 1 et 5 heures.

Une autre variante du procédé consiste à ajouter l'isocyanate à l'amine ou au mélange d'amine à fonctions silanes et de monter la température de réaction jusqu'à obtenir la réaction à une température comprise entre 100 et 200 °C, de préférence entre 110 et 160°C pendant un temps compris entre 1 et 5 heures.

Le ratio fonctions isocyanates / fonctions amines est compris entre 2 et 50, de préférence entre 4 et 25.

Une autre variante du procédé de synthèse de polybiurets consiste à faire réagir un composé comportant au moins une fonction isocyanate avec un composé porteur d'au moins une fonction alcoxy dialcoyle silane et/ou une fonction alcoyl dialcoxy silane et/ou une fonction trialcoxysilane et au moins une fonction une fonction urée ou thiourée. Le milieu réactionnel est maintenu à une température comprise entre 100 et 200°C, de préférence entre 110 et 160°C pendant un temps compris entre 1 et 5 heures, en présence éventuelle d'un catalyseur choisi parmi les acides carboxyliques et ou acides de Lewis.

Les structures obtenues peuvent s'écrire comme suit :

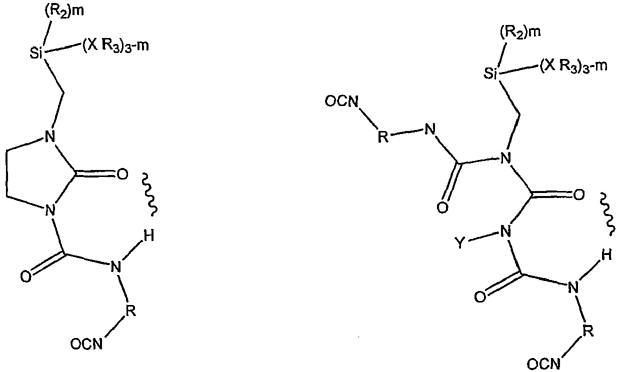

Les composés porteurs d'au moins une fonction alcoxy dialcoyle silane et/ou une fonction alcoyl dialcoxy silane et/ou une fonction trialcoxysilane et au moins une fonction urée ont pour formules :

(Y)₂-N-C(=Z)-N(-Y)-R₅-Si -(R₃=X)3-m(-(R₂)m

ou

C(=Z)-[(NY -R₅-Si - (R₃-X)3-m(-(R₂)m)]]2

Avec Y tel que défini précédemment et au moins un des Y est égal à H, Y pouvant être une chaîne alcoylène pontant les deux azotes de l'urée, éventuellement substituée

A- N(Y)d -C (=Z)-N(Y)-R₅-Si - (R₃-X)3-m(-(R₂)m

Avec
A représentant le reste d'un squelette hydrocarbonée comportant au moins une fonction amine primaire ou secondaire engagée dans une liaison urée ou thio urée
Avec Y tel que défini précédemment et au moins un des Y est égal à H, Y pouvant être une chaîne alcoylène pontant les deux azotes de l'urée, éventuellement substituée
Z = O ou S

A titre d'exemple d'urée non limitatifs on peut citer l'aminocarbonyl amino 1 propyl triméthoxysilane, l'amino carbonyl amino 1 propyl triéthoxysilane, le N 2 (propyl triméthoxysilane) imidazolidine 1 one, le N 2 (propyl triéthoxysilane) imidazolidine 1 one.

Le procédé de synthèse des polyacylurées biuret consiste
- à ajouter à l'isocyanate de départ ou au mélange polyisocyanate de départ un composé porteur d'au moins une fonction acide carboxylique
- à monter la température à une valeur d'environ 100°C plus ou moins 20° C
- à ajouter à ce milieu réactionnel un composé porteur d'au moins une fonction amine primaire ou secondaire et porteur d'au moins une fonction silane ou un mélange de ces amines
- à maintenir le milieu réactionnel à une température comprise entre 100 et 200°C, de préférence entre 110°C et 160°C pendant un temps compris entre 1 et 5 heures
- à éliminer le monomère n'ayant pas réagi par un procédé adapté tel que la distillation sous vide sur un appareil à film mince
- à récupérer le produit poly acylurée biuret à motifs alcoxysilane et à motifs isocyanate.

Une variante du procédé consiste à ajouter l'amine à l'isocyanate et au composé acide à froid et chauffer en suite à une température comprise entre 100 et 200°C, de préférence entre 110°C et 160°C pendant un temps compris entre 1 et 5 heures.

Une autre variante du procédé consiste à ajouter l'isocyanate à l'amine ou au carboxylate d'amine ou mélange d'amine à fonctions silanes et de monter la température de réaction jusqu'à obtenir la réaction à une température comprise entre 100 et 200 °C, de préférence entre 110 et 160°C pendant un temps compris entre 1 et 5 heures.

Le ratio fonctions carboxyliques fonctions isocyanates de départ est compris entre 1/20 et 1/4.

D'une manière générale le ratio NCO/Nucléophiles (COOH + amines) est compris entre 1 et 50 de préférence entre 2 et 25.

Les taux de transformation des monomères isocyanates dépend du ratio NCO/Amines et NCO/COOH. Plus le ratio NCO/nucléophiles est grand et moins le taux de transformation en fonctions isocyanates est élevé.

De manière surprenante, comparativement aux biurets classiques obtenus à partir de hexaméthylène diisocyanate (HDI), et pour des taux de transformation en fonctions isocyanates comparables, les composés objets de l'invention se caractérisent par une plus faible viscosité ce qui est un élément intéressant pour diminuer les composés organiques volatils rejetés dans l'atmosphère. Ainsi certains biurets obtenus à partir de HDI et 1 amino propyl triéthoxysilane présentent une viscosité de 2570 mPas à 25°C pour un taux de transformation de l'ordre de 45% alors que des biurets de HDI conduisent à des viscosité de l'ordre de 9000 mPas à 25°C pour des taux de transformation comparable.

La viscosité des composés objets de l'invention est fonction bien évidemment du monomère isocyanate engagé, les composés aliphatiques donnant des viscosités généralement plus élevées que les dérivés isocyanates aliphatiques à courte chaîne(4 à 10 chaînons).

Les composés de l'invention obtenus par le procédé se caractérisent par
- la présence d'au moins une liaison biuret et/ou acylurée
- et un titre NCO compris entre 0 et 20% en poids de NCO pour 100 g de solution, de préférence compris entre 1 et 19%
- et un titre en motifs Si - X- R₃ exprimé en % pondéral de silicium (Si) compris entre 0,1% et 17,5%, de préférence compris entre 0,5% et 13% et une distribution en oligomères.

Les composés de l'invention présentent une double réactivité la réactivité des fonctions isocyanates et la réactivité des fonctions alcoxysilanes.

Les composés de l'invention peuvent ainsi présenter des plages de fonctionnalité très large en fonction des composés mis en jeu et en fonction du ratio NCO/nucléophiles (amine, urée, amides) mis en jeu.

Ainsi les amino alcoyles trialcoxysilanes, composés monomères possédant trois fonctions alcoxy silanes (fonctionnalité 3) potentiellement réactives conduisent rapidement à des composés possédant une haute fonctionnalité. Ainsi les composés biurets vrais de structure 1 et 2 présentent une fonctionnalité potentielle de 5 (deux fonctions isocyanates et trois fonctions alcoxysilanes).
Le tris biuret comportant trois motifs biurets aura une fonctionnalité de 11 (deux fonctions isocyanates et 3* 3 fonctions alcoxysilanes).

Il est donc difficile de calculer une fonctionnalité moyenne de la composition réticulante dans la mesure où chaque groupe alcoxysilane constitue un site potentiel de réaction.

Les compositions se caractérisent par une répartition constituée d'au moins un des composés suivants :
- de composés biuret vrai mixte et/ou acylurée vrai mixte de l'invention comportant au moins une fonction silane sans fonction isocyanate libre
- et/ou de composés biuret vrai mixte et/ou acylurée vrai mixte de l'invention comportant au moins une fonction silane et au moins une fonction isocyanate libre
- et/ou de composés polybiuret et/ou acylurée de l'invention comportant au moins une fonction silane sans fonction isocyanate libre
- et/ou de composés polybiuret vrai et/ou polyacylurée vrai de l'invention comportant au moins une fonction silane et au moins une fonction isocyanate libre.

Eventuellement la composition contient des isocyanates ou polyisocyanates ne comportant pas de motifs silanes à savoir :
- des composés carbamate d'alcoyle et de l'isocyanate ou du mélange d'isocyanates de départ
- et éventuellement des composés allophanate d'alcoyle et de l'isocyanate ou du mélange d'isocyanates de départ
- des composés isocyanurates d'isocyanates
- des composés biurets.

On entend par biuret vrai le produit de réaction de deux fonctions isocyanates avec une fonction amine. Par biuret vrai mixte on entend le composé précédent dont le squelette portant la fonction amine est différent du squelette portant les fonctions isocyanates.

Les composés objets de l'invention peuvent être utilisés pour la synthèse de dérivés fonctionnels ou la préparation de compositions pour mastics ou pour revêtements appliqués sur des surfaces organiques ou minérales (métal, plastiques, bois, tissu, cuir, béton, ...) à des fins décoratives, fonctionnelles et/ou de protection, comme agents de couplage entre une surface et un composé fonctionnel organique ou minéral.

Les composés de la présente invention peuvent aussi être incorporés dans la fabrication de matériaux à base de polyuréthannes (mousses), d'élastomères, de fibres ou de caoutchouc.

Les domaines d'application sont donc très divers (peintures, vernis, adhésifs, pneumatiques ...) et concernent aussi bien des applications d'intérieur, qu'extérieur (exposés à la lumière naturelle) ou exposés à des milieux particuliers (matériaux immergés dans l'eau...).

Ces composés peuvent aussi être utilisés pour modifier les propriétés de surfaces des revêtements (hydrophobation, dureté...).

Les composés de l'invention présentent des indices de coloration faible inférieur à 200 Hazen.

Les fonctions isocyanates portées par les composés de l'invention du mélange final peuvent être fonctionnalisés définitivement ou temporairement, totalement ou partiellement par différents composants nucléophiles qui peuvent être choisis parmi
- les alcoxysilanes à fonctions nucléophiles tels que par exemple les amino ou thio alcoyle trialcoxysilanes,
- les acrylates d'hydroxyalcoyle
- des allongeurs de chaîne tels que des diamines, des diols ou polyols
- les agents de masquage temporaires des fonctions isocyanates bien connus de l'homme de l'art tels que les oximes, les pyrazoles, les triazoles, les imidazoles, les lactames, les cétoesters, l'ensemble de ces composés pouvant porter un ou plusieurs substituants. On peut ainsi citer à titre d'exemples non limitatifs la méthyléthylcétoxime, le 3,5 diméthylpyrazole, l'epsilon caprolactame...

Ces dérivés constituent pour certains des composés à double réactivité, ainsi a titre d'exemples non limitatifs on peut citer les composés de l'invention dont les fonctions isocyanates sont masquées par un agent de masquage temporaire thermolabile, les composés de l'invention dont les fonctions isocyanates sont fonctionnalisées par des dérivés acrylates ou méthacrylates.

Les compositions objet de l'invention peuvent être utilisées
- pour réagir avec les fonctions hydroxyles de polymères polyols tels que cellulose, guars, bois pour leur conférer diverses propriétés telles qu'hydrofugation
- pour réagir avec des fonctions à hydrogène mobile de polyols telles que les fonctions hydroxyles d'un polymère polyol et/ ou les fonctions amines ou thiols ou carboxyliques de polymères pour obtenir des revêtements polyuréthannes, et/ou polyurées et/ou polythiouréthannes et/ou polyamides
- comme additifs de formulations de revêtements, vernis ou adhésifs pour apporter des propriétés particulières telles que par exemple l'abaissement de tension superficielle
- pour réagir avec des fonctions hydroxyles ou silanols de composés minéraux tels que la silice ou le dioxyde de titane, ou la zircone
- pour réagir avec d'autres composés silanes porteur d'au moins une fonction alcoxysilane tels que des époxy alcoyl trialcoxy silane, des alcoyl trialcoxysilanes , des tétraalcoxysilanes ...

Ces composés peuvent être mis en réaction en phase organique ou phase aqueuse.

Dans le cas de revêtements de type polyuréthanne ou polyurée, les co-produits de réaction avec les composés de l'invention peuvent être
- des poly(thi)ols acryliques dérivés de la polymérisation de composés monomères porteurs de doubles liaisons activées tels que les acrylates ou méthacrylates de (cyclo)alcoyles ou d'hydroxyalcoyles
- des polyamines acryliques
- des polymères poly(thi)ols ou polyamines polyesters issus de la polycondensation d'un diacide ou diester ou carbonate avec un diol ou un aminoalcool
- des polymères poly(thi)ols polycarbonates
- des composés polysiloxanes comportant des motifs alcoyles porteurs de fonctions hydroxyles et/ou amino et/ou thio des polyamines
- des polyéthers porteurs de fonctions hydroxyles et / ou amines et/ou thiols fonctions hydroxyles
- des composés polypréniques à fonctions hydroxylés ou acides carboxyliques
- des alcoxysilanes
- ou des composés polymères à fonctions hydroxyles, thiols ou amines masquées temporairement. A titre d'exemple de ces fonctions masquées on peut citer les imines, les dioxolanes, les acétals, etc....

La synthèse de ces polymères et les monomères constitutifs de ces polymères sont largement connus de l'homme de l'art. A titre d'exemples de monomères porteurs de double liaisons on peut citer les acrylates et méthacrylate de n butyle, de cyclohexyle, de méthyle, d'isopropyle, de tertiobutyle, l'acrylamide et le méthacrylamide ainsi que leurs dérivé N alcoylés, les acide acrylique et méthacryliques, le styrène, le butadiène, les dérivés vinylés.

Comme exemples non limitatifs de monomères de la réaction de polycondensation on peut citer l'acide adipique, l'acide succinique, glutarique, dodécanedioique, l'acide phtalique, les esters de ces diacides, les carbonates d'alcoylène tels que le carbonate de méthyle, le carbonate d'éthyle, le carbonate de propylène ou d'éthylène, les diols tels que butane diols, hexane diols, cyclohexanediols...

A titre d'exemple de composés polyéthers ou polymères époxy on peut citer l'oxyde d'éthylène, ou de propylène.

Des composés tels que pigments, additifs de rhéologie, catalyseurs, charges diverses peuvent être ajoutées aux formulations pour apporter les propriétés recherchées.

Les exemples suivants sont représentatifs de l'invention.

### Définitions et Méthodes analytiques :

Est réputé agent masquant un composé à hydrogène mobile dont le composé d'adition avec une fonction isocyanate aliphatique linéaire présente une température de libération au plus égale à 180°C

### TEST A L'OCTANOL - définitions

| | |
|---|---|
| température de "libération" (ou de "déblocage") | : c'est la température la plus faible à laquelle l'agent de masquage de l'isocyanate masqué est déplacé à hauteur de 9/10 (arrondi mathématique) par un monoalcool primaire (l'alcool primaire est en général l'octanol). |
| durée de vie au stockage | : Pour s'assurer, une bonne durée de vie au stockage, il est préférable de choisir des fonctions isocyanates masquées dont le test à l'octanol montre une "libération" à 80°C, avantageusement à 90°C, au plus égale à 90%. |
| Avancement de la réaction | : On considère que la réaction est complète si elle est réalisée à plus de 90%. |

### MODE OPERATOIRE

Dans un tube, type SCHOTT, avec agitation magnétique, on charge environ 5 mmol en équivalent NCO masqué protégé à évaluer.

On ajoute 2,5 à 3 ml de dichloro-1,2 benzène (solvant) l'équivalent d'octanol-1 (5 mmol, soit 0,61 g et éventuellement avec le catalyseur à tester avec le groupe masquant).

Le milieu réactionnel est ensuite porté à la température testée. On chauffe alors pendant 6 h à la température testée, de façon à débloquer et ainsi rendre réactives les fonctions isocyanates. La réaction terminée, le solvant est éliminé par distillation sous vide et le résidu est analysé en RMN, Masse et infra rouge. A Partir de ces données, on évalue le pourcentage de fonction isocyanate masquée condensée avec l'octanol-1.

### Dosage des fonctions isocyanates :

On utilise la méthode standardisée de dosage des fonctions isocyanates par la méthode dite de la dibutylamine. Dosage en retour par une solution titrée d'HCL, de la N,N dibutylamine non consommée par la réaction avec les fonctions isocyanates du mélange à doser. La différence entre la N,N dibutylamine ayant réagi et la quantité introduite permet de mesurer le titre en fonctions isocyanates du mélange à doser.

### Détermination des Mn et Mw des polymères :

On utilise la chromatographie de perméation de gel comme méthode de détermination des masses moléculaires moyenne en nombre et en poids. Des étalons de polystyrène de poids moléculaire connu sont utilisés pour calibrer les colonnes de perméation de gel. Le solvant d'élution utilisé est un bon solvant des polymères étalons et des polymères à analyser. Il est choisi en tenant compte des contraintes apportées par la méthode de détection des polymères (réfractométrie ou analyse par absorption ultraviolet ou analyse par infrarouge). Ce solvant est choisi parmi les éthers tels que le tétrahydrofuranne, les dérivés chlorés tels que le dichlorométhane...

On compare le volume d'élution des polymères à analyser aux volumes d'élution des polymères étalons et on en déduit ainsi la masse moléculaire. Les oligomères élués constitutifs du mélange à analyser peuvent aussi être récupérés séparément pour analyse et caractérisation par diverses techniques d'analyse structurale tels que RMN H1, RMN C13, infra rouge....

### Abréviations utilisées :

- HDI :: Hexaméthylène diisocyanate
- GPC :: chromatographie par perméation de gel
- DBA :: N,N dibutylamine
- APTEO :: aminopropyltriéthoxysilane
- APTMO :: aminopropyltriméthoxysilane

### Exemples de synthèse

### Exemple 1 : Biuret d'hexaméthylène diisocyanate (HDI) et d'aminopropyltriéthoxysilane (APTEO) CMI 1487

Dans un réacteur de 3l équipé d'une agitation mécanique, d'ampoules d'addition et d'un réfrigérant, inerté à l'azote, on introduit 1680g de hexaméthylène diisocyanate. Le titre NCO de départ est de 1,19. La température du milieu réactionnel est de 18,5°C. On ajoute alors 456,5 g d'aminopropyltriéthoxysilane (APTEO) en une heure. Le ratio molaire NCO/amine est de 10/1. On observe une dérive exothermique et l'apparition d'un précipité blanc dans le milieu réactionnel. On profite de la réaction exothermique pour élever la température du milieu réactionnel à 100°C. La température du milieu réactionnel monte ainsi progressivement: au bout de 10 minutes après l'addition, la température du milieu réactionnel est de 25°C, 43°C après 30 minutes, 93°C après 55 minutes. Au bout d'une heure, le précipité observé est pratiquement entièrement soluble dans le milieu réactionnel. Dès la fin de l'addition, on élève la température du milieu réactionnel à 140°C par apport d'énergie extérieure. Après deux heures de réaction à 140°C le titre en fonctions isocyanates du milieu réactionnel est de 0,729 moles de NCO pour 100 g de milieu réactionnel.

Le milieu réactionnel est alors purifié par 2 distillations successives de l'HDI monomère sur un appareil à film mince sous vide de 0,4 mBar et à 160°C avec un débit de 900 g/heure pour le premier passage et 250 g/heure pour le second passage.

On récupère 960 g d'une composition de biuret d'hexaméthylène diisocyanate (HDI) et d'aminopropyltriéthoxysilane (APTEO) soit un rendement de l'ordre de 45%.

Le titre NCO est de 0,364 (soit environ 15,3%) et la viscosité est de 2575 mPas à 25°C.

Le titre en Silicium est de 3% en poids.

L'analyse RMN du proton en milieu CDCL3 donne la répartition des fonctions suivantes :

| Motif | Moles de motifs | % poids de motifs |
|---|---|---|
| Somme des motifs HDI | 100 | 74,4 |
| dont carbamate | 1,3 | 1,4 |
| dont allophanate | 0,3 | 0,5 |
| Motif (EtO)3Si(CH2)3-N- | 26 | 23,6 |

La répartition des motifs biuret est la suivante et mesurée sur les signaux suivants des NH (à 7,5, 7,0 et 6,7 ppm)

| Motifs | Déplacement chimique | % |
|---|---|---|
| Biuret mixte HDI/(EtO)₃Si(CH2)₃-N- | 7,5 ppm | 49 |
| Biuret vrai de HDI | 7,0 ppm | 39 |
| Urée | 6,7 ppm | 12 |

Le motif biuret vrai de HDI est constitué par trois chaînes hexaméthylène liées au motif biuret par l'intermédiaire des azotes.

Le biuret mixte est constitué de deux chaînes hexaméthylène de l'HDI et d'une chaîne propyl triéthoxysilane liées au motif biuret par l'intermédiaire des azotes. On obtient donc une composition constituée d'oligomères isocyanates biurets de différent degré de polymérisation constitués de composés oligomères biurets HDI et APTEO, d'oligomères biuret vrai de HDI et de composés constitués d'enchaînement de biuret vrai de HDI et de biuret d'HDI et APTEO.

La fonctionnalité en fonction isocyanate est donc légèrement supérieure à 3 dans la mesure où au cours du procédé il y a eu formation de biuret vrai de HDI qui est trifonctionnel.

### Exemple 2: Biuret d'hexaméthylène diisocyanate (HDI) et d'aminopropyltriméthoxysilane (APTMO) CMI 1489

On procède comme pour l'exemple 1 sauf que l'on utilise l'APTMO en lieu et place de l'APTEO.

On utilise un ratio molaire NCO/NH2 de 10. On travaille avec 1680 g de HDI et 370 g de APTMO.

La viscosité de la composition finale après distillation de l'HDI est de 3980 mPas à 25°C et le titre NCO est de 0,356 soit 15%. Le titre en Silicium est 3,8%.

Le rendement récupéré est de 45% soit 924 g de composition finale qui présente les caractéristiques suivantes.

L'analyse RMN du proton en milieu CDCL3 donne la répartition des fonctions suivantes :

| Motif | Moles de motifs | % poids de motifs |
|---|---|---|
| Somme des motifs HDI | 100 | 70,2 |
| dont carbamate | 4,2 | 4 |
| dont allophanate | 0,7 | 1,2 |
| Motif (EtO)3Si(CH2)3-N- | 28,7 | 24,6 |

La répartition des motifs biuret est la suivante et mesurée sur les signaux suivants des NH (à 7,5, 7,0 et 6,7 ppm)

| Motifs | Déplacement chimique | % |
|---|---|---|
| Biuret mixte HDI/(EtO)3Si(CH2)3-N- | 7,5 ppm | 59 |
| Biuret vrai de HDI | 7,0 ppm | 30 |
| Urée | 6,7 ppm | 11 |

### Exemple 3: Biuret d'hexaméthylène diisocyanate (HDI) et d'aminopropyltriméthoxysilane (APTMO) (CMI 1539)

On procède comme pour l'exemple 2 sur les mêmes quantités de produit mais en modifiant un peu les conditions opératoires notamment le temps de chauffage est de 3h au lieu de 2 H.

On obtient 927 g de produit soit un rendement de 45% de titre NCO de 0, 342 soit 14,4 % et de viscosité de 5420 mPas à 25°C. Le titre en Silicium est de 3,5%.

On constate que le procédé est reproductible.

### Exemple 4: Biuret d'hexaméthylène diisocyanate (HDI) et d'aminopropyltriméthoxysilane (APTMO) (CMI 1478)

On procède comme pour l'exemple 2 et 3 à la différence que le lot est séparé en deux avant distillation du monomère. 1010 g de produit sont purifiés par distillation du monomère HDI.

On obtient 430 g de produit soit un rendement de 42,55% de titre NCO de 0, 347 soit 14,6 % et de viscosité de 5090 mPas à 25°C. Le titre en Silicium est de 2,5%.

L'analyse RMN du proton en milieu CDCL3 donne la répartition des fonctions suivantes :

| Motif | Moles de motifs | % poids de motifs |
|---|---|---|
| Somme des motifs HDI | 100 | 70,5 |
| Dont mono carbamate de méthyl et d'HDI | 2,7 | 2,2 |
| Dont allophanate de méthyl et d'HDI | 0,6 | 0,9 |
| Motif (EtO)3Si(CH2)3-N- | 29,7 | 25,5 |

La répartition des motifs biuret mesurée sur les signaux suivants des NH (7,5, 7,0 et 6,7 ppm) est la suivante :

| Motifs | Déplacement chimique | % |
|---|---|---|
| Biuret mixte HDI/(EtO)3Si(CH2)3-N- | 7,5 ppm | 63 |
| Biuret vrai de HDI | 7,0 ppm | 28 |
| Urée | 6,7 ppm | 9 |

L'analyse de la répartition oligomériques par perméation de gel donne la répartition suivante :

| Espèces | % poids |
|---|---|
| HDI monomère et NCO propyltriméthoxysilane | 0,2 |
| Mono carbamate de méthyle et d'HDI | 0,4 |
| Dimère vrai de HDI | 1 |
| Mono allophanate de méthyle et d'HDI | 0,6 |
| Biuret mixte vrai 2HDI/1(EtO)3Si(CH2)3-NH- | 37,4 |
| Dimère HDI - Biuret mixte vrai 2HDI/1(EtO)3Si(CH2)3-NH- | 1,8 |
| Bis biuret mixte (3HDI - 2 (EtO)3Si(CH2)3-NH-) | 23,2 |
| Tris biuret mixte (4HDI - 3 (EtO)3Si(CH2)3-NH-) + enchaînement biuret vrai de HDI | 16 |
| Lourds biuret mixte (4HDI - 3 (EtO)3Si(CH2)3-NH-) + enchaînement biuret vrai de HDI | 19,4 |

### Exemple 5: Biuret d'hexaméthylène diisocyanate (HDI) et d'aminopropyltriéthoxysilane (APEMO) (CMI 1460)

On procède comme pour l'exemple 1, sauf que le ratio NCO/NH2 est de 7.

On travaille avec 765 g de HDI et 287 g de APETO.

On obtient après purification 571 g soit un rendement de 55%.

Le titre NCO de 0,317 soit 13,3% et de viscosité de 6790 mPas à 25°C. Le titre en Silicium est de 3,5%.

L'analyse de la répartition oligomériques est présentée dans le tableau ci après

| | **02CMI146002** Pied |
|---|---|
| **HDI** | < 0.1 |
| **Carbamate d'éthyle et de HDI** | 0,3 |
| **Dimère HDI vrai** *(trace carbamate)* | 0,5 |
| **Biuret mixte** *(trace fonction trimère)* | 30,0 |
| **Bis-biuret mixte** ***(**trace fonction dimère et trimère)* | 24,1 |
| **Tris-biuret mixte** *(trace fonction dimère et trimère)* | 16,5 |
| **Lourd (Tétra-biuret mixte)** *(trace fonction dimère et trimère)* | 28,6 |

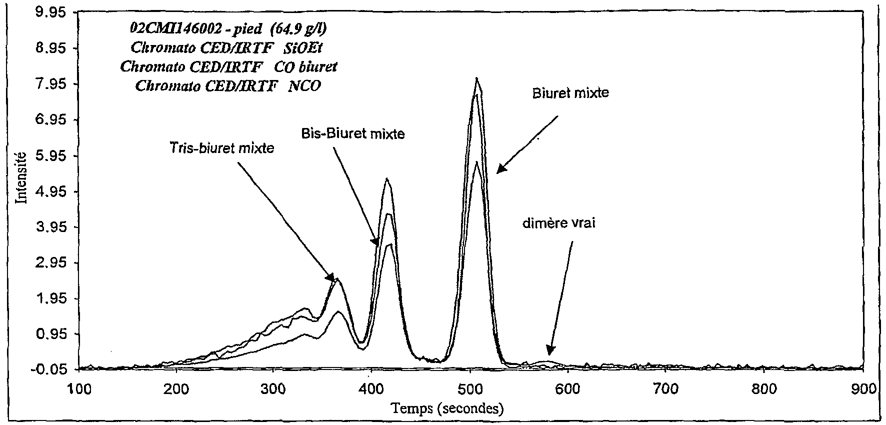

### Exemple 6: Biuret d'hexaméthylène diisocyanate (HDI) et d'aminopropyltriéthoxysilane (APEMO) (CMI 1459)

On procède comme pour l'exemple 1, à la différence que le ratio NCO/NH2 est de 10.

On travaille avec 840 g de HDI et 221 g de APETO.

On obtient après purification 466 g soit un rendement de 44 %.

Le titre NCO de 0, 359 soit 15 % et de viscosité de 2850 mPas à 25°C. Le titre en Silicium est de 3,35 %.

Le procédé est reproductible.

L'analyse de la composition est présentée dans le tableau ci après

| | **02CMI145902** Pied |
|---|---|
| **HDI** | < 0,1 |
| **Carbamate d'éthyle et d'HDI** | 0,3 |
| **Dimère HDI vrai** | 1,2 |
| **Biuret mixte** *(trace fonction trimère)* | 38,4 |
| **Bis-biuret mixte** *(trace fonction dimère et trimère)* | 27,0 |
| **Tris-biuret mixte** *(trace fonction dimère et trimère)* | 14,9 |
| **Lourd (Tétra-biuret mixte)** *(trace fonction dimère et trimère)* | 18,2 |

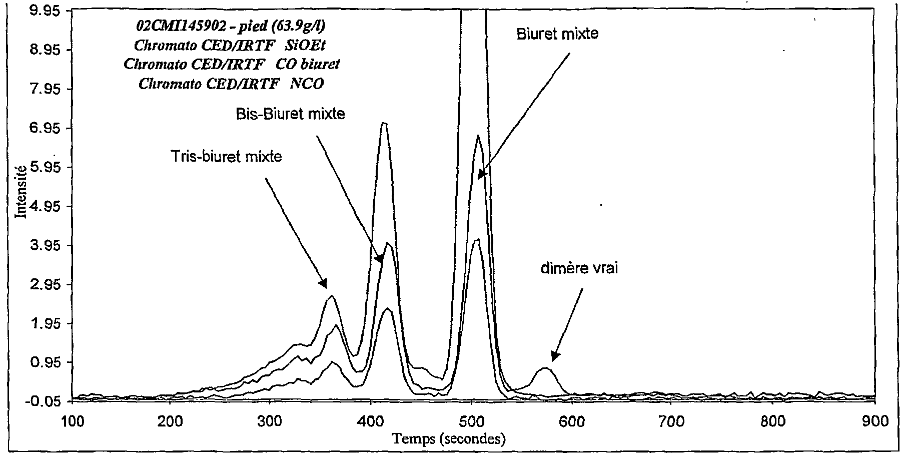

### Exemple 7: Composition polybiuret et polyisocyanurate à fonction trialcoxysilane (CMI 1479).

Dans un réacteur de 3l équipé d'une agitation mécanique, d'ampoules d'addition et d'un réfrigérant, inerté à l'azote, on introduit 1010g de composition de l'exemple 4. Le titre NCO du milieu réactionnel est de 30% (0,716 NCO pour 100 g). on porte le milieu réactionnel à 110°C et on introduit sous agitation 10 g d'hexaméthyldisilazane (10% en poids). On amène la température du milieu réactionnel à 140°C en 50 minutes et on maintient à cette température pendant 3 heures. Le taux de transformation des fonctions NCO est mesuré régulièrement. Il évolue comme suit : 8,9% au bout de 1 heure de réaction après addition de HMDZ, 10,6% après 1H30, 14,8% après 2 h 30, 16,8% après 3 heures. On refroidit le milieu réactionnel à 100°C en 25 minutes et on ajoute 4,6 g de butanol 1 au milieu réactionnel pour arrêter la réaction de cyclotrimérisation. Le milieu réactionnel est ensuite purifié pour éliminer le monomère en excès. On utilise la même méthode de purification que celle décrite dans l'exemple 1.

484 g de composition polybiuret polyisocyanurate à motifs alcoxysilanes sont obtenus, soit un rendement de 47%.

Le titre NCO est de 0,369 soit 15,5% en poids. La viscosité est de 11 800 mPas à 25°C.

La répartition oligomérique de la composition ainsi obtenue est présentée ci après.

| Espèces | % poids |
|---|---|
| HDI monomère et NCO propyltriméthoxysilane | 0,2 |
| Mono carbamate de méthyle et d'HDI | 0,4 |
| Mono carbamate de méthyle et d'isocyanato propyl trialcoxysilane | 0,3 |
| Dimère vrai de HDI | 1,8 |
| Mono allophanate de méthyle et d'HDI | 2 |
| Mélange de Biuret mixte vrai 2HDI/1(EtO)3Si(CH2)3-NH- et de trimère isocyanurate vrai de HDI et de trimère isocyanurate vrai de HDI et d'isocyanato propyl trialcoxysilane | 32,3 |
| Dimère HDI - Biuret mixte vrai 2HDI/1(EtO)3Si(CH2)3-NH- | 3,7 |
| Bis biuret mixte (3HDI - 2 (EtO)3Si(CH2)3-NH-) et biuret mixte (3HDI - 2 (EtO)3Si(CH2)3-NH-) - et à motifs isocyanurate et dimère | 19,3 |
| Lourds constitués d'enchaînement biuret mixte (4HDI - 3 (EtO)3Si(CH2)3-NH-), biuret vrai de HDI, et comportant des motifs isocyanurates, dimère, carbamate et allophanate* | 40 |

| | |
|---|---|
| * voir ci après un exemple de structures d'enchaînements comportant des motifs biurets et isocyanurate comportant des motifs alcoxysilane. | |

L'analyse RMN du proton en milieu CDCL3 donne la répartition des fonctions suivantes

| Motif | Moles de motifs | % poids de motifs |
|---|---|---|
| Somme des motifs HDI | 100 | 70,2 |
| dont mono carbamate de méthyl et d'HDI | 4,5 | 3,7 |
| dont allophanate de méthyl et d'HDI | 2,9 | 4,5 |
| dont motifs isocyanurates de HDI | 8,4 | 5,9 |
| Motif (EtO)3Si(CH2)3-N- | 16,8 | 14,4 |
| Somme des motifs issus du butanol (carbamate allophanate) | 3,6 | 1,1% |

La répartition des motifs biuret mesurée sur les signaux suivants des NH (7,5, 7,0 et 6,7 ppm) est la suivante :

| Motifs | Déplacement chimique | % |
|---|---|---|
| Biuret mixte HDI/(EtO)3Si(CH2)3-N- | 7,5 ppm | 39 |
| Biuret vrai de HDI | 7,0 ppm | 50 |
| Urée | 6,7 ppm | 11 |

Exemple de structures d'enchaînements comportant des motifs biurets et isocyanurate comportant des motifs alcoxysilane non limitatif

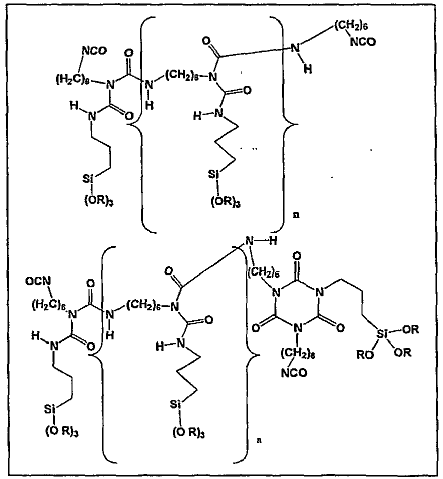

Exemples 8 à 10 : Exemples de fonctionnalisation des composés biurets silanes.

### Exemple 8: Prépolymère polybiuret polyuréthanne polydiméthyl siloxanne à fonctions trialcoxyxysilanes (CMI 1488)

On charge dans un réacteur 100 g d'une composition de l'exemple 1, et 182 g d'une huile silicone téléchélique à 2 fonctions hydroxypropyles (RHODORSIL V75). Le titre en fonctions isocyanates et de 0,129.

### Le ratio molaire fonctions NCO/fonctions OH est de 2.

On chauffe à 80°C et on suit le titre en fonctions isocyanates. Il évolue de la manière suivante :
- après 2 h 40 de réaction le titre est de 0,113 soit une consommation en fonctions NCO de 12,4%
- après 4 h de réaction le titre est de 0,097 soit une consommation en fonctions NCO de 24,8%
- après 9 h de réaction à 80°C, le titre NCO est de 0,066 (2,77%) soit un taux de transformation de 49%.

On obtient ainsi une composition prépolymère polybiuret polyuréthanne polydiméthyl siloxanne à fonctions trialcoxyxysilanes pendantes de titre NCO de 2,77%. Le produit est un liquide visqueux.

Ce produit est utilisé comme primaire d'adhérence pour mastics silicones.

### Exemple 9 : Polybiuret polyuréthanne à fonctions trialcoxysilanes (CMI 1491)

On masque les fonctions isocyanates d'un composé de l'exemple 2 par le méthanol pour obtenir le carbamate de méthyle correspondant.

Dans un réacteur on introduit 100 g d'une composition de l'exemple 2 et 11,5 g de méthanol, le titre NCO est de 3,320. Le ratio NCO / OH = 1

On chauffe pendant 4 h à 60°C le titre NCO mesuré est de 0,055. Après encore 6 h à 80°C, le titre NCO est de 0,017 moles de NCO pour 100 g soit 0,71%.

On obtient une composition de polybiuret à fonctions trialcoxysilanes polycarbamate de méthyle.

Ces composés peuvent être utilisés pour être réticulés avec des mélamines et permettent un meilleur accrochage des pigments au réseau ainsi obtenu.

### Exemple 10 : Polybiuret polyurée à fonctions trialcoxysilanes mixtes (CMI 1491)

On charge dans un réacteur 100 g de l'exemple 1 puis on ajoute en 15 minutes 67,3 g d'aminopropyl triméthoxysilane. Le ratio NCO/NH2 est égal à 1. Le titre en fonction NCO est de 0,218.

La réaction est exothermique et la température du milieu réactionnel monte à 100°C. Après 3 heures de réaction à 80°C le titre en fonctions NCO est de 0.

La masse réactionnelle est ensuite soutirée à 100°C.

Après refroidissement, la composition obtenue donne une pâte blanchâtre non collante.

### Exemple 11 : Polybiuret à fonctions trialcoxysilanes mixtes et à motifs acryliques et à fonctions isocyanates libres (CMI 1491)

Cette composition est une composition utile pour des systèmes à triple système de réticulation
- réticulation via les fonctions isocyanates avec des composés à hydrogène mobile polyols, polyamines
- réticulation par technique radiative (réticulation sous rayonnement UV ou canon à électron) avec d'autres monomères réticulables possédant des doubles liaisons
- réticulation avec des fonctions silanols ou hydroxyles de matériaux minéraux (Silice, dioxyde de titane, zircone) ou alcoxysilanes.

Ces systèmes sont donc intéressants pour jouer le rôle d'agents de couplage entre un matériau inorganique et un matériau organique.

On introduit dans un réacteur 100 g de composition de l'exemple 1 (titre NCO de 0,364 mole de NCO pour 100 g), 14,1 g d'hydroxyéthylacrylate (HEA) soit 0, 121 mole et 114 mg de BHT (bis 2,6 tertio butyl 1 hydroxy toluène, soit 1000 ppm par rapport à HEA).

On chauffe à 80°C pendant 12 heures.

Le titre NCO est mesuré et évolue comme suit
- après 2 h 30, le titre NCO est de 0,266 soit un taux de transformation en NCO de 16,6%
- après 4 h 30, le titre NCO est de 0,239 soit un taux de transformation en NCO de 25,1%
- après 6 h le titre NCO est de 0,227 soit un taux de transformation en NCO de 29%
- après 11 h le titre NCO est de 0,219 soit un taux de transformation en NCO de 31,3%
- après 12 h le titre NCO est de 0,215 soit un taux de transformation en NCO de 32,6%.

Le titre NCO théorique calculé est de 0,213 mole de NCO pour 100 g.

La réaction est donc arrêtée et la composition ainsi obtenue est une composition liquide qui présente un titre en fonction NCO de 9% et un titre en Silicium de 2,6%.

Un des composés de la composition obtenue peut ainsi s'écrire comme suit

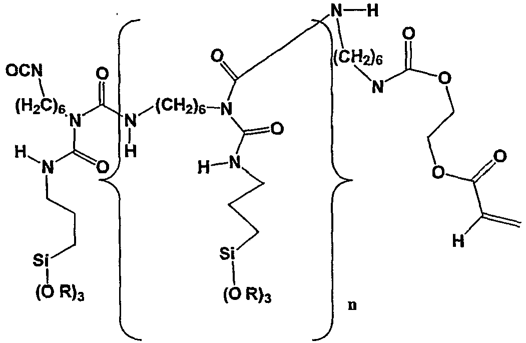

### Exemple Comparatif 1 :

Dans un réacteur équipé comme dans l'exemple 1, on introduit 100 g de TOLONATE HDT (polyisocyanurate de HDI vendu par la société RHODIA) de titre en fonctions NCO de 0,52 mole pour 100 g. On coule 115 g d'aminopropyl triéthoxysilane (soit 0,52 moles) en 1 heure. Le ratio NCO/NH2 est de 1.

On observe une précipitation immédiate d'urée du TOLONATE HDT et d'amino propyltriéthoxysilane avec dégagement d'une forte exothermie. Le mélange devient difficilement agitable.

Le produit est un solide qu'il est difficile de manipuler et qui est peu soluble dans les solvants organiques tels que le Solvesso, les esters.

### Exemple comparatif 2 :

On procède comme pour l'exemple comparatif 1, à la différence que l'on utilise l'amino propyl triméthosysilane (93g) comme silane. On obtient ainsi des composés qui précipitent et qui sont faiblement solubles dans les solvants organiques.

### Résultats d'application obtenus avec les composés de l'invention.

Les composés de l'invention ont été utilisés avec succès dans 4 domaines d'application
- Revêtements peintures et vernis
- Mastics silicones et primaires d'adhésion sur différentes surfaces
- Pneumatiques poids lourds
- Revêtement fibre polyamide

## Revendications

1. Composition polyisocyanate comprenant au moins deux composés oligomériques distincts comportant au moins trois motifs et au plus 5 motifs choisis parmi les motifs de formule (I) et les diamino et au moins une fonction choisie parmi les fonctions isocyanates et parmi celles qui en dérivent, l'un des dits composés comporte au moins deux motifs de formule (I) et un autre comporte au moins deux motifs diamino, caractérisé en que le motif de la formule (I) est le suivant : 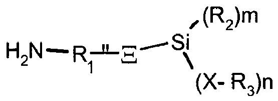
où Ξ représente une liaison simple ;
où R₁ représente une chaîne hydrocarbonée linéaire ou ramifiée de 2 à 20 atomes de carbone, ladite chaîne hydrocarbonée étant aliphatique, aromatique ou ou aralcoyle, éventuellement interrompue par des hétéroatomes,
où m représentant un nombre entier compris dans l'intervalle fermé 0 et 3, avantageusement au moins égal à 2, de préférence à 3 ;
où n représentant un nombre entier compris dans l'intervalle fermé 1 à 3 ; avec la condition que m + n = 3
où R₂ une chaîne hydrocarbonée de 1 à 20 atomes de carbone de préférence de 1 à 12 atomes de carbone cette chaîne hydrocarbonée pouvant être aliphatique, y compris aralcoyle, ou aromatique; linéaire ou ramifiée éventuellement interrompu par des hétéroatomes, la chaîne R₂ pouvant être de type alcoylène si les deux carbones terminaux de cette chaîne sont liés au silicium
où R₃ une chaîne hydrocarbonée de 1 à 20 atomes de carbone de préférence de 1 à 12 atomes de carbone cette chaîne hydrocarbonée pouvant être aliphatique ou aromatique ou aralcoyle, linéaire ou ramifiée éventuellement interrompue par des hétéroatomes, la chaîne R₃ pouvant être de type alcoylène si les deux carbones terminaux de cette chaîne sont liés à deux groupes X portés par le même atome de silicium,
X=OouS.

2. Composition selon la revendication 1, **caractérisée par le fait que** le rapport entre les motifs aminoalcoysilanes et les motifs diamine est au moins égal à 15%.

3. Composition selon les revendications 1 et 2, **caractérisée par le fait que** lesdits composés oligomériques représentent chacun au moins 3%, avantageusement au moins 5%, de préférence au moins 8%.

4. Composition selon les revendications 1 à 3, **caractérisée par le fait que** lesdits composés oligomériques représentent chacun au plus, 2/3, avantageusement, de préférence 1/3 en masse de la composition.

5. Composition selon les revendications 1 à 4, **caractérisé par le fait que** les dite fonctions qui dérivent des fonctions isocyanates sont choisies parmi les fonctions carbamate, urétidinedione, isocyanurate, biuret, allophanate.

6. Composition selon les revendications 1 à 5, **caractérisée par le fait que** lesdits composés sont des composés à fonction biuret.

7. Composition selon les revendications 1 à 6, **caractérisée par le fait que** sa teneur en fonctions biuret (>N-CO-N(-)-CO-N< MM = 84) est au moins égale à 5%, avantageusement à 8%, de préférence à 10%.

8. Composition selon les revendications 1 à 7, **caractérisée par le fait que** sa teneur en fonctions biuret (>N-CO-N(-)-CO-N< MM = 84) est au plus égale à 20%, avantageusement à 18%, de préférence à 16%.

9. Composition selon les revendications 1 à 8, **caractérisée par le fait qu'**elle présente une teneur en fonctions isocyanates (libre et masquée) au moins égale à 5%, avantageusement à 8%, de préférence à 10%, plus préférentiellement à 12%.

10. Composition selon les revendications 1 à 9, **caractérisée par le fait qu'**elle présente une teneur en fonctions isocyanates libres au moins égale à 5%, avantageusement à 8%, de préférence à 10%, plus préférentiellement à 12%.

11. Composition selon les revendications 1 à 9, **caractérisée par le fait qu'**elle présente une teneur en fonctions isocyanates masquées au moins égale à 5%, avantageusement à 8%, de préférence à 10%, plus préférentiellement à 12%.

12. Composition selon les revendications 1 à 11, **caractérisée par le fait qu'**elle présente une viscosité au plus égale à 6000 mPa.s.

13. Composition selon les revendications 1 à 12, **caractérisée par le fait qu'**elle comporte au plus 2%, avantageusement au plus 1%, de préférence au plus à 0,5% en masse d'isocyanate monomère (diisocyanatoalcane)

14. Composition selon les revendications 1 à 13, **caractérisée par le fait qu'**elle comporte au plus 2%, avantageusement au plus 1%, de préférence au plus à 0,5% en de isocyanatoalcoylsilane (correspondant à l'aminoalcoylsilane)

## Patentansprüche

1. Polyisocyanat-Zusammensetzung, mindestens zwei unterschiedliche Oligomerverbindungen umfassend, die mindestens drei Einheiten und höchstens fünf Einheiten, ausgewählt aus den Einheiten der Formel (I) und den Diamino-Einheiten, und mindestens eine Funktion, ausgewählt aus den Isocyanatfunktionen und solchen, die davon abstammen, aufweisen, wobei eine der Verbindungen mindestens zwei Einheiten der Formel (I) aufweist und eine andere mindestens zwei Diamino-Einheiten aufweist, **dadurch gekennzeichnet, dass** die Einheit der Formel (I) die folgende ist 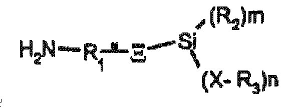
wobei Ξ eine einfache Bindung darstellt;
wobei R₁ eine lineare oder verzweigte Kohlenwasserstoffkette mit 2 bis 20 Kohlenstoffatomen darstellt, wobei die Kohlenwasserstoffkette aliphatisch, aromatisch oder aralcoyl, gegebenenfalls durch Heteroatome unterbrochen, ist
wobei m eine ganze Zahl innerhalb des geschlossenen Intervalls 0 und 3 darstellt, vorteilhafterweise mindestens gleich 2 ist, vorzugsweise 3 ist;
wobei n eine ganze Zahl innerhalb des geschlossenen Intervalls 1 bis 3 darstellt; mit der Bedingung, dass m + n = 3 ist,
wobei R₂ eine Kohlenwasserstoffkette mit 1 bis 20 Kohlenstoffatomen, vorzugsweise mit 1 bis 12 Kohlenstoffatomen ist, wobei diese Kohlenwasserstoffkette aliphatisch, einschließlich aralcoyl oder aromatisch sein kann; linear oder verzweigt, gegebenenfalls durch Heteroatome unterbrochen, kann die Kette R₂ von der Alcoylenart sein, wenn die zwei Endkohlenstoffe dieser Kette an Silizium gebunden sind,
wobei R₃ eine Kohlenwasserstoffkette mit 1 bis 20 Kohlenstoffatomen, vorzugsweise mit 1 bis 12 Kohlenstoffatomen ist, wobei diese Kohlenwasserstoffkette aliphatisch oder aromatisch oder aralcoyl, linear oder verzweigt, gegebenenfalls unterbrochen durch Heteroatome sein kann, wobei die Kette R₃ von der Alcoylenart sein kann, wenn die zwei Endkohlenstoffe dieser Kette an zwei Gruppen X gebunden sind, die von demselben Siliziumatom getragen werden,
X = O oder S.

2. Zusammensetzung nach Anspruch 1, **gekennzeichnet durch** die Tatsache, dass das Verhältnis zwischen den Aminoalcoysilan-Einheiten und den Diamin-Einheiten mindestens gleich 15% ist.

3. Zusammensetzung nach den Ansprüchen 1 und 2, **gekennzeichnet durch** die Tatsache, dass die Oligomerverbindungen jede mindestens 3%, vorteilhafterweise mindestens 5%, vorzugsweise mindestens 8% darstellen.

4. Zusammensetzung nach den Ansprüchen 1 bis 3, **gekennzeichnet durch** die Tatsache, dass die Oligomerverbindungen jede höchstens 2/3, vorteilhafterweise, vorzugsweise 1/3 hinsichtlich der Masse der Zusammensetzung darstellen.

5. Zusammensetzung nach den Ansprüchen 1 bis 4, **gekennzeichnet durch** die Tatsache, dass die Funktionen, die von den Isocyanat-funktionen abstammen, ausgewählt sind aus den Carbamat-, Uretidindion-, Isocyanurat-, Biuret-, Allophanatfunktionen.

6. Zusammensetzung nach den Ansprüchen 1 bis 5, **gekennzeichnet durch** die Tatsache, dass die Verbindungen solche mit Biuretfunktion sind.

7. Zusammensetzung nach den Ansprüchen 1 bis 6, **gekennzeichnet durch** die Tatsache, dass ihr Gehalt an Biuretfunktionen (>N-CO-N(-)-CO-N< MM = 84) mindestens gleich 5%, vorteilhafterweise 8%, vorzugsweise 10% ist.

8. Zusammensetzung nach den Ansprüchen 1 bis 7, **gekennzeichnet durch** die Tatsache, dass ihr Gehalt an Biuretfunktionen (>N-CO-N(-)-CO-N< MM = 84) höchstens gleich20%, vorteilhafterweise 18%, vorzugsweise 16% ist.

9. Zusammensetzung nach den Ansprüchen 1 bis 8, **gekennzeichnet durch** die Tatsache, dass sie einen Gehalt an Isocyanatfunktionen (frei und maskiert) mindestens gleich 5%, vorteilhafterweise 8%, vorzugsweise 10%, besonders bevorzugt 12% aufweist.

10. Zusammensetzung nach den Ansprüchen 1 bis 9, **gekennzeichnet durch** die Tatsache, dass sie einen Gehalt an freien Isocyanatfunktionen mindestens gleich 5%, vorteilhafterweise 8%, vorzugsweise 10%, besonders bevorzugt 12% aufweist.

11. Zusammensetzung nach den Ansprüchen 1 bis 9, **gekennzeichnet durch** die Tatsache, dass sie einen Gehalt an maskierten Isocyanatfunktionen mindestens gleich 5%, vorteilhafterweise 8%, vorzugsweise 10%, besonders bevorzugt 12% aufweist.

12. Zusammensetzung nach den Ansprüchen 1 bis 11, **gekennzeichnet durch** die Tatsache, dass sie eine Viskosität von höchstens gleich 6000 mPa.5 aufweist.

13. Zusammensetzung nach den Ansprüchen 1 bis 12, **gekennzeichnet durch** die Tatsache, dass sie höchstens 2 Gew.-%, vorteilhafterweise höchstens 1 Gew.-%, vorzugsweise höchstens 0,5 Gew.-% an monomerem Isocyanat (Diisocyanatoalkan) umfasst.

14. Zusammensetzung nach den Ansprüchen 1 bis 13, **gekennzeichnet**
**durch** die Tatsache, dass sie höchsten 2 Gew.-%, vorteilhafterweise höchstens 1 Gew.-%, vorzugsweise höchstens 0,5 Gew.-% an Isocyanatoalcoylsilan (entsprechend dem Aminoalcoylsilan) umfasst.

## Claims

1. Polyisocyanate composition comprising at least two separate oligomeric compounds consisting of at least three units and at most five units selected from the units of formula (I) and diamino units and at least one functional group selected from the isocyanate functional groups and from those derived therefrom, one of said compounds consists of at least two units of formula (I) and another consists of at least two diamino units, **characterised in that** the unit of formula (I) is the following: 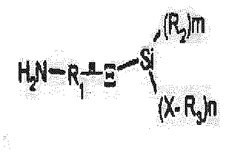
where Ξ represents a single bond;
wherein R₁ represents a linear or branched hydrocarbon chain of 2 to 20 carbon atoms, wherein said hydrocarbon chain is aliphatic, aromatic or aralkyl, possibly interrupted by heteroatoms;
where m represents a whole number included in the closed interval of 0 and 3, advantageously at least equal to 2, preferably to 3;
where n represents a whole number included in the closed interval 1 to 3;
on condition that m + n = 3;
where R₂ is a hydrocarbon chain of 1 to 20 carbon atoms, preferably 1 to 12 carbon atoms, wherein this hydrocarbon chain can be aliphatic, including aralkyl, or aromatic; linear or branched possibly interrupted by heteroatoms, and the R₂ chain can be alkylene if the two end carbons of this chain are bonded to silicon; where R₃ is a hydrocarbon chain of 1 to 20 carbon atoms, preferably 1 to 12 carbon atoms, wherein this hydrocarbon chain can be aliphatic or aromatic or aralkyl, linear or branched possibly interrupted by heteroatoms, and the R₃ chain can be alkylene if the two end carbons of this chain are bonded to two X groups carried by the same silicon atom,
X = O or S.

2. Composition according to claim 1, **characterised in that** the ratio between the aminoalkylsilane units and the diamine units is at least equal to 15%.

3. Composition according to claims 1 and 2, **characterised in that** said oligomeric compounds each represent at least 3%, advantageously at least 5%, preferably at least 8%.

4. Composition according to claims 1 to 3, **characterised in that** said oligomeric compounds each represent at most 2/3 advantageously, preferably 1/3 by mass of the composition.

5. Composition according to claims 1 to 4, **characterised in that** said functional groups derived from isocyanate functional groups are selected from carbamate, uretidine dione, isocyanurate, biuret, allophanate functional groups.

6. Composition according to claims 1 to 5, **characterised in that** said compounds are compounds with biuret functional group.

7. Composition according to claims 1 to 6, **characterised in that** its content of biuret functional groups (>N-CO-N(-)-CO-N< MM =84) is at least equal to 5%, advantageously to %, preferably to 10%.

8. Composition according to claims 1 to 7, **characterised in that** its content of biuret functional groups (>N-CO-N(-)-CO-N< MM = 84) is at most equal to 20%, advantageously to 18%, preferably to 16%.

9. Composition according to claims 1 to 8, **characterised in that** it has a content of isocyanate functional groups (free or masked) at least equal to 5%, advantageously to 8%, preferably to 10%, more preferred to 12%.

10. Composition according to claims 1 to 9, **characterised in that** it has a content of free isocyanate functional groups at least equal to 5%, advantageously to 8%, preferably to 10%, more preferred to 12%.

11. Composition according to claims 1 to 9, **characterised in that** it has a content of masked isocyanate functional groups at least equal to 5%, advantageously to 8%, preferably to 10%, more preferred to 12%.

12. Composition according to claims 1 to 11, **characterised in that** it has a viscosity at most equal to 6000 mPa.s.

13. Composition according to claims 1 to 12, **characterised in that** it consists of at most 2%, advantageously at most 1%, preferably at most 0.5% by mass monomer isocyanate (diisocyanate alkane).

14. Composition according to claims 1 to 13, **characterised in that** it consists of at most 2%, advantageously at most 1%, preferably at most 0.5% by mass isocyanatoalkylsilane (corresponding to aminoalkylsilane).
